# EUROPEAN PATENT SPECIFICATION

(11) **EP 3 533 607 B1**
(45) Date of publication and mention of the grant of the patent: **29.09.2021**
(21) Application number: 17864328.4
(22) Date of filing: 30.10.2017
(51) Int. Cl.: B32B 27/30, B32B 1/08, B32B 27/34, B32B 27/40, C08L 75/04, C08L 77/10

(54) **COMPOSITE MEMBER**
VERBUNDELEMENT
ÉLÉMENT COMPOSITE

(30) Priority: 31.10.2016 JP 2016212731
(43) Date of publication of application: 04.09.2019
(73) Proprietor: UBE Industries, Ltd., Ube-shi, Yamaguchi 755-8633 (JP)
(72) Inventor: OKUSAKO Takashi, Ube-shi Yamaguchi 755-8633 (JP); TOKUHARA Katsuhiko, Ube-shi Yamaguchi 755-8633 (JP); FUJIMURA Hideki, Ube-shi Yamaguchi 755-8633 (JP); HARA Yoshitomo, Ube-shi Yamaguchi 755-8633 (JP)
(74) Representative: Hoffmann Eitle
(86) International application number: PCT/JP2017/039077
(87) International publication number: WO 2018/079768

(56) References cited:
- WO-A1-98/58973
- JP-A- H0 796 564
- JP-A- H11 197 249
- JP-A- 2007 216 387
- JP-A- 2007 216 387
- JP-A- 2009 542 476
- JP-A- 2016 049 764
- JP-A- 2016 049 764
- ZUOXIANG ZENG: "Full article: Hot melt adhesive properties of PA/TPU blends compatibilized by EVA-g-MAH", JOURNAL OF ADHESION SCIENCE AND TECHNOLOGY, vol. 31, no. 9, 27 September 2016 (2016-09-27), pages 943-957, XP055682687,

## Description

### TECHNICAL FIELD

The present invention relates to a composite member.

### BACKGROUND ART

Fluorine-containing resins are used in a wide range of fields due to their superior heat resistance, chemical resistance, weather resistance, non-adhesiveness, low friction, low dielectric properties and the like, and tubes for the transport of chemicals is an example of an important application thereof due to their superior chemical resistance in particular. However, fluorine-containing resins are not necessarily sufficiently satisfactory with respect to adhesiveness, coatability, printability, dyeability, flexibility and the like. Consequently, various studies are being conducted on molded articles obtained by compounding fluorine-containing resins with other thermoplastic resins. For example, a method has been proposed for laminating a fluorine-containing polymer having a reactive functional group with a polyamide-based resin having a specific amine value (see, for example, Patent Documents 1 and 2). In addition, a method has been proposed for laminating an inner layer consisting of an ethylene-tetrafluoroethylene resin, an intermediate layer consisting of an ethylene-vinyl alcohol copolymer resin, and an outer layer consisting of a resin or elastomer (see, for example, Patent Document 3).

Patent Document 4 describes a laminated tube which comprises at least two layers, that is, a layer comprising a polyamide elastomer with a concentration of a terminal amino group being 20 µeq/g or above and a layer comprising a fluorine-containing polymer which has a functional group having reactivity with respect to a polyamide resin introduced into its molecular chain.

Patent Document 5 describes a fluororesin laminate which is obtained by laminating a layer mainly composed of a fluorine-containing copolymer having a melting point of 220°C or less and a layer mainly composed of a thermoplastic non-fluoroelastomer or a thermoplastic non-fluororesin having a melting point of 260°C or less.

Non-Patent Document 1 describes a copolyamide (PA52) having a good adhesion to aluminum sheets and its synthesis from caprolactam, nylon 66 salt, nylon 1010 salt and stearic acid, as well as the preparation of a series of PA52/TPU blends compatibilized by maleic anhydride-grafted ethylene vinyl acetate (EVA-g-MAH) for use as hot melt adhesives. In the ternary PA52/EVA-g-MAH/TPU blends, the weight ratio of PA52 to TPU is kept constant at 50/50 and the amount of EVA-g-MAH is varied at 0, 2, 4, 6 and 8 wt% over the total weight of the blend, respectively.

### [Prior Art Documents]

### [Patent Documents]

[Patent Document 1] International Publication No. WO 2004/110756
[Patent Document 2] Japanese Unexamined Patent Publication No. 2007-216387
[Patent Document 3] Japanese Unexamined Patent Publication No. 2011-62881
[Patent Document 4] JP 2007 216387 A
[Patent Document 5] JP 2016 049764 A

### [Non-Patent Documents]

[Non-Patent Document 1] Zuoxiang Zeng: "Full article: Hot melt adhesive properties of PA/TPU blends compatibilized by EVA-g-MAH", Journal of Adhesion Science and Technology, Vol. 31, No. 9, September 27, 2016, pages 943-957

### DISCLOSURE OF THE INVENTION

### [Problems to be Solved by the Invention]

In the art described in Patent Documents 1 and 2, since a fluorine-containing polymer having a reactive functional group is required, it was difficult to apply this art to general-purpose fluorine-containing polymers. In addition, it was necessary to provide an intermediate layer in the case of the art described in Patent Document 3.

An object of the present invention is to provide a composite member that has a member containing a fluorine-containing resin and a member containing a thermoplastic resin and demonstrates superior adhesiveness between both members, wherein the content percentage of polyurethane in the first member is 70% by mass or more and less than 100% by mass and the content percentage of the polyamide elastomer in the first member is 0.01% by mass or more and 30% by mass or less.

### [Means for Solving the Problems]

Specific means for solving the aforementioned problems are as indicated below, and the present invention includes the following aspects.

A composite member obtained by directly contacting a first member containing a thermoplastic polyurethane and a polyamide elastomer and a second member containing a fluorine-containing resin.

Preferable aspects of the composite member are indicated below. A plurality of preferable aspects can be combined.
[1] A composite member wherein the polyamide elastomer has a hard segment and a soft segment, and the hard segment has a polyamide constituent unit formed from at least one type selected from the group consisting of a nylon salt composed of a diamine and a dicarboxylic acid, an aminocarboxylic acid compound represented by the following formula (2), and a lactam compound represented by the following formula (3): 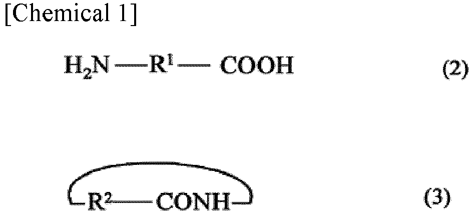 (in the formula (2) and (3), R¹ represents a linking group containing a hydrocarbon chain and R² represents a linking group containing a hydrocarbon chain).
[2] A composite member wherein the soft segment has a polyether constituent unit.
[3] A composite member wherein the polyamide elastomer has a polyamide constituent unit formed from at least one type selected from the group consisting of ω-lauryl lactam, 11-aminoundecanoic acid and 12-aminododecanoic acid.
[4] A composite member wherein the soft segment has a polyether constituent unit formed from at least one type selected from the group consisting of polyethylene glycol, polypropylene glycol, polytetramethylene ether glycol and a XYX-type triblock polyether represented by the following formula (5): 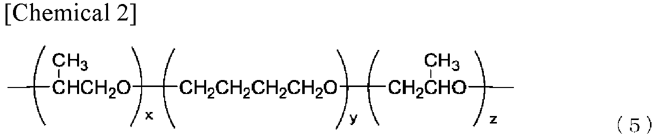 (in the formula (5), x represents an integer of 1 to 20, y represents an integer of 4 to 50, and z represents an integer of 1 to 20).
[5] A composite member wherein the hard segment contains the polyamide constituent unit and a constituent unit derived from a dicarboxylic acid represented by the following formula (4): 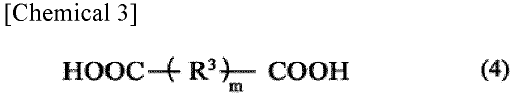 (in the formula (4), R³ represents a linking group containing a hydrocarbon chain and m represents 0 or 1).
[6] A composite member wherein the polyamide elastomer contains:
   a first constituent unit derived from a diamine compound represented by the following formula (1),
   a second constituent unit derived from an aminocarboxylic acid compound represented by the following formula (2) or a lactam compound represented by the following formula (3), and
   a third constituent unit derived from a dicarboxylic acid compound represented by the following formula (4): 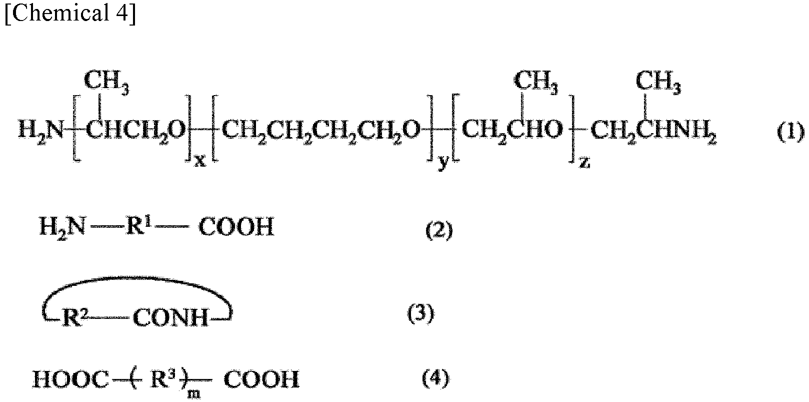
   (wherein, x represents an integer of 1 to 20, y represents an integer of 4 to 50, z represents an integer of 1 to 20, R¹ represents a linking group containing a hydrocarbon chain, R² represents a linking group containing a hydrocarbon chain, R³ represents a linking group containing a hydrocarbon chain, and m represents 0 or 1).
[7] A composite member wherein the fluorine-containing resin is at least one type selected from the group consisting of polytetrafluoroethylene, ethylene/tetrafluoroethylene copolymer, polyvinylidene fluoride, tetrafluoroethylene/perfluoroalkyl vinyl ether copolymer, tetrafluoroethylene/hexafluoropropylene copolymer, and tetrafluoroethylene/hexafluoropropylene/vinylidene fluoride copolymer.
[8] A laminate composed of a composite member.
[9] A laminated tube composed of a composite member.

### [Effects of the Invention]

According to the present invention, a composite member can be provided that has a member containing a fluorine-containing resin and a member containing a thermoplastic resin, and demonstrates superior adhesiveness between both members.

### BEST MODE FOR CARRYING OUT THE INVENTION

In the present description, in the case a plurality of substances corresponding to each component is present in a composition, the content of each component in the composition refers to the total amount of the plurality of substances present in the composition unless specifically indicated otherwise.

[Composite Member] The composite member according to the present embodiment is obtained by directly contacting a first member containing a thermoplastic polyurethane and a polyamide elastomer with a second member containing a fluorine-containing resin. As a result of the first member containing a polyamide elastomer in addition to a thermoplastic polyurethane and contacting directly with a second member containing a fluorine-containing resin, a composite member is formed in which the first member and the second member are strongly adhered and integrated into a single unit. Moreover, the composite member is, for example, able to compose a laminated tube demonstrating superior flexibility, chemical resistance, scratch resistance and the like as a result of being molded into a tubular shape.

### [First Member]

The first member contains a thermoplastic polyurethane and a polyamide elastomer. The form of the first member is suitably selected corresponding to the purpose and the like, and may be in the form of a block, film, tube, blow-molded article, press-molded article or multilayer injection-molded article (such as that molded by DSI or DRI, in-mold molding, insert molding or multicolor molding) and the like. In the case the form of the first member is that of a film or tube, the thickness thereof can be, for example, from 10 µm to 10 mm.

### 1. Thermoplastic Polyurethane

A known thermoplastic polyurethane can be used without any particular limitations for the thermoplastic polyurethane contained in the first member (to also be simply referred to as "polyurethane").

A polyurethane obtained by reacting a polyol and a polyisocyanate, or a polyurethane obtained by reacting a polyol, a polyisocyanate and a chain extender, for example, can be used for the polyurethane. The polyurethane is particularly preferably obtained by reacting a diol and diisocyanate or a diol, diisocyanate and chain extender.

A condensed polyester polyol, lactone-based polyester polyol, polycarbonate polyol or polyether polyol, for example, is used for the polyol.

A polyester diol obtained by using one type or two or more types of a dicarboxylic acid and diol is preferably used for the condensed polyester polyol.

Examples of dicarboxylic acids include aliphatic dicarboxylic acids such as glutaric acid, adipic acid, pimelic acid, suberic acid, azelaic acid, sebacic acid or dodecanedioic acid, alicyclic dicarboxylic acids such as cyclohexane dicarboxylic acid and aromatic dicarboxylic acids such as terephthalic acid, isophthalic acid or orthophthalic acid, and at least one type selected from the group consisting thereof can be used. Among these, at least one type selected from the group consisting of aliphatic dicarboxylic acids such as adipic acid, azelaic acid or sebacic acid is used preferably. Furthermore, a lower alkyl ester of these dicarboxylic acids may also be used instead of at least a portion of these dicarboxylic acids to form the condensed polyester polyol.

Examples of diols include aliphatic diols such as ethylene glycol, 1,2-propylene glycol, 1,3-propylene glycol, 1,4-butanediol, 1,5-pentanediol, 3-methyl-1,5-pentanediol, 1,6-hexanediol, 1,7-heptanediol, 1,8-octanediol, 2-methyl-1,8-octanediol, 1,9-nonanediol or 1,10-decanediol, and alicyclic diols such as cyclohexanedimethanol or cyclohexanediol, and at least one type selected from the group consisting thereof can be used. Among these, at least one type selected from the group consisting of aliphatic diols such as 3-methyl-1,5-pentanediol, 2-methyl-1,8-octanediol or 1,9-nonanediol is used preferably.

Examples of lactone-based polyester polyols include polyester diols obtained by reacting a lactone compound, such as β-propiolactone, pivalolactone, δ-valerolactone, ε-caprolactone, methyl-ε-caprolactone, dimethyl-ε-caprolactone or trimethyl-ε-caprolactone, with a hydroxy compound such as a short chain diol.

A polycarbonate diol obtained by reacting, for example, a low molecular weight diol with a carbonate compound such as a dialkyl carbonate, alkylene carbonate or diaryl carbonate is preferable for the polycarbonate polyol. A low molecular weight diol previously indicated as a production raw material of a polyester diol can be used for the low molecular weight diol serving as a production raw material of the polycarbonate diol. In addition, examples of dialkyl carbonates include dimethyl carbonates and diethyl carbonates, examples of alkylene carbonates include ethylene carbonate, and examples of diaryl carbonates include diphenyl carbonates.

Examples of polyether polyols include polyether diols such as polyoxyethylene glycol, polyoxypropylene glycol or polyoxytetramethylene glycol, and polyether triols such as polyoxypropylene triol. Various types of known polyols for polyurethane can also be used in addition to those listed above.

A thermoplastic polyurethane, such as that having a polyester diol and/or polyether diol for the soft segment thereof, for example, a polyester-based polyurethane resin and/or polyether-based polyurethane resin, can be preferably used for the polyurethane, and a polyester-based polyurethane resin can be used more preferably from the viewpoint of adhesiveness.

There are no particular limitations on the polyisocyanate used for obtaining the polyurethane, a diisocyanate is used preferably, and any diisocyanate used in the production of polyurethanes or thermoplastic polyurethanes can be used.

Aliphatic or alicyclic diisocyanates, such as tetramethylene diisocyanate, pentamethylene diisocyanate, hexamethylene diisocyanate, lysine diisocyanate, cyclohexylmethane diisocyanate, 2,2,4- or 2,4,4-trimethylhexamethylene diisocyanate, isopropylidene bis(4-cyclohexylisocyanate), methylcyclohexane diisocyanate or isophorone diisocyanate, or aromatic diisocyanates such as 2,4- or 2,6-tolylene diisocyanate, diphenylmethane-4,4'-diisocyanate, 3-methyldiphenylmethane-4,4'-diisocyanate, m- or p-phenylene diisocyanate, chlorophenylene-2,4-diisocyanate, naphthalene-1,5-diisocyanate, xylylene diisocyanate or tetramethylxylylene diisocyanate, can be used for the diisocyanate, and one type of two or more types of these polyisocyanates can be used. Among these, diphenylmethane-4,4'-diisocyanate is used preferably.

There are no particular limitations on the type of chain extender used to produce the polyurethane, and any chain extender conventionally used to produce ordinary polyurethanes can be used. Low molecular weight compounds having a molecular weight of 300 or less and having two or more active hydrogen atoms in a molecule thereof that are capable of reacting with an isocyanate group are preferably used for the chain extender.

Examples of chain extenders include diols such as ethylene glycol, propylene glycol, 1,4-butanediol, 1,6-hexanediol, 1,4-bis(β-hydroxyethoxy)benzene, 1,4-cyclohexanediol, bis(β-hydroxyethyl)terephthalate or xylylene glycol, diamines such as hydrazine, ethylenediamine, propylenediamine, xylylenediamine, isophorone diamine, piperazine and derivatives thereof, phenylenediamine, tolylenediamine, xylenediamine, adipic acid dihydrazide or isophthalic acid dihydrazide, and amino alcohols such as aminoethyl alcohol or aminopropyl alcohol, and one type or two or more types thereof can be used. Among these, aliphatic diols having 2 to 10 carbon atoms are used preferably and 1,4-butanediol is used more preferably.

The content percentage of polyurethane in the first member is, 70% by mass or more, preferably 80% by mass or more, more preferably 90% by mass or more, and even more preferably 95% by mass or more. In addition, the content percentage of polyurethane is, less than 100% by mass, preferably 98% by mass or less and more preferably 96% by mass or less.

### 2. Polyamide Elastomer

A first preferable aspect of the polyamide elastomer is as indicated below.

The polyamide elastomer contained in the first member has a hard segment and a soft segment and the hard segment has a polyamide constituent unit. The soft segment of the polyamide elastomer preferably has a polyether constituent unit. Examples of polyamide elastomers having a polyether constituent unit for the soft segment include polyether polyester polyamide elastomers in which the hard segment and soft segment are bound with an ester bond, and polyether polyamide elastomers in which the hard segment and soft segment are bound with an amide bond. Polyether polyamide elastomers in which the hard segment and soft segment are bound with an amide bond are preferable from the viewpoint of demonstrating the effects of the present invention.

The polyamide constituent unit in the hard segment is preferably a constituent unit formed from a polyamide-forming monomer (at least one type selected from the group consisting of a nylon salt composed of a diamine and dicarboxylic acid, an aminocarboxylic acid compound represented by the following formula (2), and a lactam compound represented by the following formula (3)).

The hard segment can be derived from a polyamide having carboxyl groups for both end groups, and may also be a segment containing a polyamide constituent unit and a constituent unit derived from a dicarboxylic acid represented by the following formula (4).

Examples of aminocarboxylic acid compounds represented by the following formula (2) include aliphatic ω-aminocarboxylic acids having 5 to 20 carbon atoms such as 6-aminocaproic acid, 7-aminoheptanoic acid, 8-aminooctanoic acid, 10-aminocaprylic acid, 11-aminoundecanoic acid or 12-aminododecanoic acid.

Examples of diamines of nylon salts composed of a diamine and dicarboxylic acid include diamine compounds such as aliphatic diamines having 2 to 20 carbon atoms in the manner of ethylenediamine, trimethylenediamine, tetramethylenediamine, hexamethylenediamine, heptamethylenediamine, octamethylenediamine, nonamethylenediamine, decamethylenediamine, undecamethylenediamine, dodecamethylenediamine, 2,2,4-trimethylhexane-1,6-diamine, 2,4,4-trimethylhexane-1,6-diamine or 3-methylpentane-1,5-diamine.

Examples of dicarboxylic acids of nylon salts composed of a diamine and a dicarboxylic acid include the same compounds as dicarboxylic acid compounds represented by the following formula (4) to be subsequently described.

Examples of lactam compounds represented by the following formula (3) include aliphatic lactams having 5 to 20 carbon atoms such as ε-caprolactam, ω-enantholactam, ω-undecalactam, ω-lauryl lactam or 2-pyrrolidone.

Among these, ω-lauryl lactam, 11-aminoundecanoic acid or 12-aminododecanoic acid is preferable from the viewpoints of dimensional stability attributable to low water absorption, chemical resistance and mechanical properties.

At least one type of dicarboxylic acid or derivative thereof selected from aliphatic, alicyclic and aromatic dicarboxylic acids can be used for the dicarboxylic acid compound represented by the following formula (4).

Specific examples of dicarboxylic acids represented by the following formula (4) include linear aliphatic dicarboxylic acids having 2 to 25 carbon atoms such as oxalic acid, succinic acid, glutaric acid, adipic acid, pimelic acid, suberic acid, azelaic acid, sebacic acid or dodecanedioic acid, or dimerized aliphatic dicarboxylic acids having 14 to 48 carbon atoms obtained by dimerizing an unsaturated fatty acid obtained by fractional distillation of triglyceride (dimer acids), and aliphatic dicarboxylic acids such as hydrogenated products thereof (hydrogenated dimer acids), alicyclic dicarboxylic acids such as 1,4-cyclohexane dicarboxylic acid, and aromatic dicarboxylic acids such as terephthalic acid or isophthalic acid. Products such as "Pripol 1004", "Pripol 1006", "Pripol 1009" or "Pripol 1013" manufactured by Uniqema can be used as dimer acids and hydrogenated dimer acids.

A polyamide having carboxyl groups on both ends can be obtained by ring-opening polymerization or polycondensation of the aforementioned polyamide constituent unit in the presence of a dicarboxylic acid represented by the following formula (4) in accordance with ordinary methods. The dicarboxylic acid of the hard segment can be used as a molecular weight control agent.

The number average molecular weight of the hard segment is preferably 300 to 15000, and more preferably 300 to 6000 from the viewpoints of flexibility and moldability.

Furthermore, in the present description, number average molecular weight refers to the number average molecular weight calculated based on the end hydroxyl value as measured in compliance with JIS K 1557. More specifically, number average molecular weight is calculated by measuring hydroxyl value and using the value of (56.1 × 1000 × valence)/hydroxyl value as determined according to the endgroup determination method (in this formula, the units of hydroxyl value are [mgKOH/g]. In the aforementioned formula, value is the number of hydroxyl groups in a single molecule.

The soft segment preferably has a polyether constituent unit, and examples thereof include polyethylene glycol, polypropylene glycol, polytetramethylene ether glycol and XYX-type triblock polyethers indicated in the following formula (5). One type of these polyether constituent units or two or more types thereof can be used, and among these, XYX-type triblock polyethers represented by the following formula (5) are more preferable. In addition, polyether diamines, obtained by reacting ammonia and the like with the end of polyether, can be used. The number average molecular weight of the soft segment is preferably 200 to 6000 and more preferably 650 to 2000.

In the following formula (5), x and z are each independently preferably an integer of 1 to 18, more preferably an integer of 1 to 16, even more preferably an integer of 1 to 14 and particularly preferably an integer of 1 to 12. In addition, y is preferably an integer of 5 to 45, more preferably an integer of 6 to 40, even more preferably an integer of 7 to 35 and particularly preferably an integer of 8 to 30.

Examples of combinations of the aforementioned hard segment and the aforementioned soft segment include each of the combinations of hard segment and soft segment previously listed. Among these, combinations of lauryl lactam ring-opening polycondensate and polyethylene glycol, combinations of lauryl lactam ring-opening polycondensate and polypropylene glycol, combinations of lauryl lactam ring-opening polycondensate and polytetramethylene ether glycol and combinations of lauryl lactam ring-opening polycondensate and XYX-type triblock polyether are preferable, and combinations of lauryl lactam ring-opening polycondensates and XYX-type triblock polyether are particularly preferable.

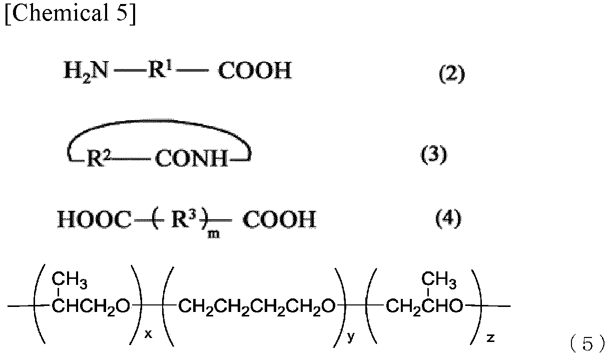

In the aforementioned formulas (2) to (5), x represents an integer of 1 to 20, y represents an integer of 4 to 50, z represents an integer of 1 to 20, R¹ represents a linking group containing a hydrocarbon chain, R² represents a linking group containing a hydrocarbon chain, R³ represents a linking group containing a hydrocarbon chain, and m represents 0 or 1.

The ratio (mass ratio) of the aforementioned hard segment to the aforementioned soft segment is preferably such that the value of hard segment/soft segment is 95/5 to 20/80. If within this range, bleed out from molded articles is easily avoided and adequate flexibility is easily secured. The ratio (mass ratio) of hard segment/soft segment is more preferably 95/5 to 25/75 and particularly preferably 50/50 to 30/70.

In the case the aforementioned ratio (mass ratio) of hard segment/soft segment is smaller than the aforementioned ranges, there are cases in which crystallinity of the polyamide component may become low and mechanical properties such as strength or elastic modulus decrease, and thereby there are cases of making this undesirable. In the case the aforementioned ratio (mass ratio) of hard segment/soft segment is greater than the aforementioned ranges, function and performance as an elastomer, such as rubber elasticity or flexibility, is difficult to be demonstrated, and thereby there are cases of making this undesirable.

Examples of commercially available products of the polyamide elastomer as described above include "DAIAMID® E1947", "DAIAMID® E47", "DAIAMID® E47H", "DAIAMID® E55", "DAIAMID® E55H", "DAIAMID® E62", "DAIAMID® E62H", "DAIAMID® E73K2", "DAIAMID® E75K2", "DAIAMID® EX9200", "DAIAMID® MSP-S", "DAIAMID® X4442W2", "DAIAMID® ZE7000", "DAIAMID® ZE7200", "VESTAMID® E47-S1", "VESTAMID® E47-S4", "VESTAMID® E55-S4", "VESTAMID® E58-S4", "VESTAMID® E62-S1", "VESTAMID® E62-S4", "VESTAMID® EX9200" and "VESTAMID® EX9202" manufactured by Daicel-Evonik Ltd., members of the "PEBAX" series manufactured by ARKEMA, "Grilflex® EBG", "Grilflex® ELG" and "Grilon® ELX" manufactured by EMS-CHEMIE Japan, and members of the "UBESTA XPA®" series manufactured by UBE INDUSTRIES, LTD. such as "UBESTA XPA 9040X1, UBESTA XPA 9040F1, UBESTA XPA 9048X1, UBESTA XPA 9048F1, UBESTA XPA 9055X1, UBESTA XPA 9055F1, UBESTA XPA 9063X1, UBESTA XPA 9063F1, UBESTA XPA 9068X1, UBESTA XPA 9068F1, UBESTA XPA 9040X2, UBESTA XPA 9048X2, UBESTA XPA 9040F2, UBESTA XPA 9048F2, UBESTA XPA 9068TF1, UBESTA XPA 9063TF1, UBESTA XPA 9055TF1 or UBESTA XPA 9048TF1" (UBE INDUSTRIES, LTD.).

Among these, members of the "UBESTA XPA®" series manufactured by UBE INDUSTRIES, LTD. are preferable.

One type of polyamide elastomer may be used alone or two or more types may be used in combination.

Examples of methods that can be used to produce a polyether polyamide elastomer include a method that includes a step for melt-polymerizing three components consisting of a polyamide-forming monomer, XYX-type triblock polyether diamine and dicarboxylic acid under applied pressure and/or normal pressure and further melt-polymerizing as necessary under reduced pressure, and a method including a step for simultaneously melt-polymerizing three components consisting of polyamide-forming monomer, XYX-type triblock polyether diamine and dicarboxylic acid under applied pressure and/or normal pressure and further melt-polymerizing as necessary under reduced pressure. Furthermore, a method can also be used consisting of initially polymerizing two components consisting of polyamide-forming monomer and dicarboxylic acid followed by polymerizing a XYX-type triblock polyether diamine.

Although there are no particular limitations on the method used to charge raw materials in the production of the polyether polyamide elastomer, the ratio of the polyamide-forming monomer to the polyamide-forming monomer and XYX-type triblock polymer diamine is preferably within the range of 20% by weight to 95% by weight, more preferably within the range of 25% by weight to 95% by weight and particularly preferably within the range of 30% by weight to 50% by weight, the ratio of the XYX-type triblock polyether diamine to the polyamide-forming monomer and XYX-type triblock polymer diamine is preferably within the range of 5% by weight to 80% by weight, more preferably within the range of 5% by weight to 75% by weight, and particularly preferably within the range of 50% by weight to 70% by weight. Among the raw materials, the XYX-type triblock polyether diamine and dicarboxylic acid are preferably charged so that the amino groups of the XYX-type triblock polyether diamine and carboxyl groups of the dicarboxylic acid are nearly equimolar.

Production of the polyether polyamide elastomer can be carried out at a polymerization temperature of preferably 150°C to 300°C, more preferably 160°C to 280°C, and particularly preferably 180°C to 250°C. In the case the polymerization temperature is lower than the aforementioned temperatures, the polymerization reaction is slow, and in the case the polymerization temperature is higher than the aforementioned temperatures, thermal decomposition occurs easily, and thereby there are cases of preventing the obtaining of a polymer having favorable properties.

In the case a ω-aminocarboxylic acid is used for the polyamide-forming monomer, the polyether polyamide elastomer can be produced using a method that includes a step for normal pressure melt polymerization or normal pressure melt polymerization followed by reduced pressure melt polymerization.

On the other hand, in the case of using a polyamide-forming monomer synthesized from a lactam or a diamine and dicarboxylic acid and/or a salt thereof for the polyamide-forming monomer, the polyether polyamide elastomer can be produced by a method consisting of melt polymerization at a pressure of 0.1 MPa to 5 MPa followed by normal pressure melt polymerization and/or reduced pressure melt polymerization in the presence of a suitable amount of water.

The polyether polyamide elastomer can normally be produced at a polymerization time of 0.5 hours to 30 hours. If polymerization time is shorter than the aforementioned range, the increase in molecular weight is inadequate, while if the polymerization time is longer than the aforementioned range, problems such as coloring occur by heat decomposition, and in either case, there are cases in which a polyether polyamide elastomer having desired physical properties is unable to be obtained.

Production of the polyether polyamide elastomer can be carried out in batches or continuously, and a batch-type reaction furnace, single-tank or multi-tank continuous reaction system or tubular continuous reaction system and the like can be used alone or in a suitable combination thereof.

In the production of the polyether polyamide elastomer, a monoamine and diamine, such as lauryl amine, stearyl amine, hexamethylenediamine or meta-xylylenediamine, or a monocarboxylic acid or dicarboxylic acid such as acetic acid, benzoic acid, stearic acid, adipic acid, sebacic acid or dodecanedioic acid can be added for molecular weight control or melt viscosity stability during molding processing. The amounts used thereof are preferably such that they are suitably added so that the relative viscosity of the ultimately obtained elastomer is within the range of 1.2 to 3.5 (0.5 weight/volume % metacresol solution, 25°C).

In the production of the polyether polyamide elastomer, the added amounts of the aforementioned monoamine and diamine and monocarboxylic acid or dicarboxylic acid and the like are preferably within a range that does not impair the properties of the resulting polyether polyamide elastomer.

In the production of the polyether polyamide elastomer, phosphoric acid, pyrophosphoric acid or polyphosphoric acid and the like can be added as necessary as a catalyst, or an inorganic phosphorous compound, such as phosphorous acid, hypophosphorous acid or alkali metal salts or alkaline earth metal salts thereof, can be added with the aim of demonstrating both the effects of a catalyst and heat resistance agent. The added amount is normally 50 ppm to 3000 ppm based on the amount of charged raw materials.

A second preferable aspect of the polyamide elastomer is as indicated below.

The polyamide elastomer contained in the first member is preferably a polymer containing a first constituent unit derived from a diamine compound represented by the following formula (1), a second constituent unit derived from an aminocarboxylic acid compound represented by the following formula (2) or lactam compound represented by the following formula (3), and a third constituent unit derived from a dicarboxylic acid compound represented by the following formula (4).

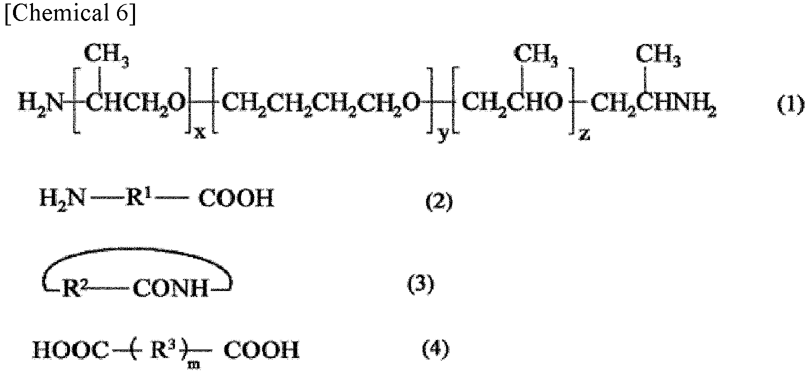

In formulas (1) to (4) above, x represents an integer of 1 to 20, y represents an integer of 4 to 50, z represents an integer of 1 to 20, R¹ represents a linking group containing a hydrocarbon chain, R² represents a linking group containing a hydrocarbon chain, R³ represents a linking group containing a hydrocarbon chain, and m represents 0 or 1.

The first constituent unit that composes the polyamide elastomer is derived from a diamine compound represented by formula (1). The diamine compound represented by formula (1) is an XYX-type triblock polyether diamine compound, and a polyether diamine, such as that produced by adding propylene oxide to both ends of poly(oxytetramethylene)glycol, to obtain polypropylene glycol followed by reacting ammonia and the like with an end of this polypropylene glycol, can be used.

In formula (1), x and z represent 1 to 20, preferably 1 to 18, more preferably 1 to 16, even more preferably 1 to 14, and particularly preferably 1 to 12, and y represents 4 to 50, preferably 5 to 45, more preferably 6 to 40, even more preferably 7 to 35, and particularly preferably 8 to 30. In addition, examples of combinations of x, y and z preferably include combinations in which x is within the range of 2 to 6, y is within the range of 6 to 12 and z is within the range of 1 to 5, and combinations in which x is within the range of 2 to 10, y is within the range of 13 to 28, and z is within the range of 1 to 9.

Specific examples of diamine compounds include XTJ-533 (in which x is roughly 12, y is roughly 11 and z is roughly 11 in the aforementioned formula (1)), XTJ-536 (in which x is roughly 8.5, y is roughly 17 and z is roughly 7.5 in the aforementioned formula (1)), and XTJ-542 (in which x is roughly 3, y is roughly 9 and z is roughly 2 in the aforementioned formula (1)) manufactured by HUNTSMAN of the U.S.A.

In addition, examples of XYX-type triblock polyether diamine compounds include XYX-1 types (in which x is roughly 3, y is roughly 14 and z is roughly 2 in formula (1)), XYX-2 types (in which x is roughly 5, y is roughly 14 and z is roughly 4 in formula (1)), and XYX-3 types (in which x is roughly 3, y is roughly 19 and z is roughly 2 in the aforementioned formula (1)).

The content percentage of the first constituent unit in the polyamide elastomer is, for example, 2% by mass to 87% by mass and preferably 7% by mass to 78% by mass.

The second constituent unit is derived from an aminocarboxylic acid compound represented by formula (2) or a lactam compound represented by formula (3). In formula (2), R¹ represents a linking group containing a hydrocarbon chain and is preferably an aliphatic, alicyclic or aromatic hydrocarbon group having 2 to 20 carbon atoms or alkylene group having 2 to 20 carbon atoms, more preferably the aforementioned hydrocarbon group having 3 to 18 carbon atoms or an alkylene group having 3 to 18 carbon atoms, even more preferably the aforementioned hydrocarbon group having 4 to 15 carbon atoms or alkylene group having 4 to 15 carbon atoms, and particularly preferably the aforementioned hydrocarbon group having 10 to 15 carbon atoms or alkylene group having 10 to 15 carbon atoms.

R² in formula (3) represents a linking group containing a hydrocarbon chain, and is preferably an aliphatic, alicyclic or aromatic hydrocarbon group having 3 to 20 carbon atoms or an alkylene group having 3 to 20 carbon atoms, more preferably the aforementioned hydrocarbon group having 3 to 18 carbon atoms or an alkylene group having 3 to 18 carbon atoms, even more preferably the aforementioned hydrocarbon group having 4 to 15 carbon atoms or an alkylene group having 4 to 15 carbon atoms, and particularly preferably the aforementioned hydrocarbon group having 10 to 15 carbon atoms or alkylene group having 10 to 15 carbon atoms.

The aminocarboxylic acid compound represented by formula (2) is a ω-aminocarboxylic acid and specific examples of ω-aminocarboxylic acids include aliphatic ω-aminocarboxylic acids having 5 to 20 carbon atoms such as 6-aminocaproic acid, 7-aminoheptanoic acid, 8-aminooctanoic acid, 10-aminocapric acid, 11-aminoundecanoic acid or 12-aminododecanoic acid.

Specific examples of lactam compounds represented by formula (3) include aliphatic lactams having 5 to 20 carbon atoms such as ε-caprolactam, ω-enantholactam, ω-undecalactam, ω-dodecalactam or 2-pyrrolidone.

The content percentage of the second constituent unit in the polyamide elastomer is, for example, 10% by mass to 95% by mass, preferably 15% by mass to 90% by mass, more preferably 15% by mass to 85% by mass and even more preferably 15% by mass to 80% by mass.

The third constituent unit is derived from a dicarboxylic acid compound represented by formula (4). In formula (4), R³ represents a linking group containing a hydrocarbon chain, preferably represents an aliphatic, alicyclic or aromatic hydrocarbon group having 1 to 20 carbon atoms or alkylene group having 1 to 20 carbon atoms, more preferably represents the aforementioned hydrocarbon group having 1 to 15 carbon atoms or alkylene group having 1 to 15 carbon atoms, even more preferably represents the aforementioned hydrocarbon group having 2 to 12 carbon atoms or alkylene group having 2 to 12 carbon atoms, and particularly preferably represents the aforementioned hydrocarbon group having 4 to 10 carbon atoms or an alkylene group having 4 to 10 carbon atoms, and m represents 0 or 1.

At least one type of dicarboxylic acid selected from aliphatic, alicyclic and aromatic dicarboxylic acids or a derivative thereof can be used for the dicarboxylic acid compound.

Specific examples of dicarboxylic acids include linear aliphatic dicarboxylic acids having 2 to 25 carbon atoms such as oxalic acid, succinic acid, glutaric acid, adipic acid, pimelic acid, suberic acid, azelaic acid, sebacic acid or dodecanedioic acid, or dimerized aliphatic dicarboxylic acids having 14 to 48 carbon atoms (dimer acids) obtained by dimerizing an unsaturated fatty acid obtained by fractional distillation of triglyceride, and aliphatic dicarboxylic acids such as hydrogenated products thereof (hydrogenated dimer acids), alicyclic dicarboxylic acids such as 1,4-cyclohexane dicarboxylic acid, and aromatic dicarboxylic acids such as terephthalic acid or isophthalic acid. Products such as "Pripol 1004", "Pripol 1006", "Pripol 1009" or "Pripol 1013" manufactured by Uniqema can be used as dimer acids and hydrogenated dimer acids.

The ratio of the total amount of the first constituent unit and the third constituent unit in the polyamide elastomer is preferably 5% by mass to 90% by mass, more preferably 10% by mass to 85% by mass, even more preferably 15% by mass to 85% by mass, particularly preferably 20% by mass to 85% by mass, and most preferably 30% by mass to 85% by mass.

The polyamide elastomer may further contain a fourth constituent unit derived from a second diamine compound other than a diamine compound represented by formula (1). Examples of the second diamine compound include at least one type selected from aliphatic diamines, alicyclic diamines, aromatic diamines and derivatives thereof.

Specific examples of the second diamine include diamine compounds such as aliphatic diamines having 2 to 20 carbon atoms in the manner of ethylenediamine, trimethylenediamine, tetramethylenediamine, hexamethylenediamine, heptamethylenediamine, octamethylenediamine, nonamethylenediamine, decamethylenediamine, undecamethylenediamine, dodecamethylenediamine, 2,2,4-trimethylhexamethylenediamine, 2,4,4-trimethylhexamethylenediamine and 3-methylpentamethylenediamine.

Japanese Unexamined Patent Publication No. 2012-211251, for example, can be referred to regarding details of the polyamide elastomer and the production method thereof. In addition, a commercially available product may be used for the polyamide elastomer. Examples of commercially available products include "UBESTA XPA 9040X1, UBESTA XPA 9040F1, UBESTA XPA 9048X1, UBESTA XPA 9048F1, UBESTA XPA 9055X1, UBESTA XPA 9055F1, UBESTA XPA 9063X1, UBESTA XPA 9063F1, UBESTA XPA 9068X1, UBESTA XPA 9068F1, UBESTA XPA 9040X2, UBESTA XPA 9048X2, UBESTA XPA 9040F2, UBESTA XPA 9048F2, UBESTA XPA 9068TF1, UBESTA XPA 9063TF1, UBESTA XPA 9055TF1 or UBESTA XPA 9048TF1" (UBE INDUSTRIES, LTD.).

The content percentage of the polyamide elastomer in the first member is 30% by mass or less, preferably 17% by mass or less, and most preferably 10% by mass or less. In addition, the content percentage of the polyamide elastomer is, 0.01% by mass or more, preferably 2% by mass or more, and more preferably 4% by mass or more. If the content percentage of the polyamide elastomer is within the aforementioned ranges, a composite member having even more superior adhesiveness can be obtained.

The content ratio (mass ratio) of the polyamide elastomer to polyurethane in the first member is, for example, 1:10000 to 3:7, preferably 1:50 to 3:17, and more preferably 1:20 to 1:9 from the viewpoint of adhesiveness.

The first member can contain another thermoplastic polymer with the exception of polyurethane, thermoplastic polymer having flexibility, elastomer other than the aforementioned polyamide elastomer or rubber and the like within a range that does not impair the properties thereof. In addition, the polyurethane resin composition may contain a heat resistance agent, ultraviolet absorber, photostabiizer, antioxidant, antistatic agent, lubricant, slipping agent, crystal nucleating agent, tackifier, sealing improver, anti-fogging agent, release agent, plasticizer, pigment, dye, fragrance, flame retardant or reinforcing material within a range that does not impair the properties thereof.

Various known methods can be used for the production method of the first member. For example, the first member can be produced by mixing the polyurethane and polyamide elastomer and the like that form the first member followed by melting and kneading and going through a process such as extrusion molding, injection molding or press molding. Furthermore, the first member can also be produced by mixing without melting and kneading followed by going through a process such as extrusion molding, injection molding or press molding and the like. In addition, mixing typically consists of uniform mixing using a Henschel mixer, ribbon blender or V-blender and the like. A Banbury mixer, kneader, roller, single-screw, twin-screw or other multi-screw kneader extruder is typically used for melting and kneading. In the case of producing according to a melting and kneading method, the polyurethane and polyamide elastomer are melted and kneaded after having uniformly mixed with other additives at prescribed blending ratios as necessary. Although the melting and kneading temperature can be suitably selected in consideration of such factors as the reaction speed or reaction selectivity corresponding to the types of polyurethane and polyamide elastomer used, the temperature is preferably 140°C to 300°C and more preferably 150°C to 270°C. Melting and kneading may be carried out under conditions of any of normal pressure, reduced pressure or applying pressure, and the duration thereof is the kneading time when using an ordinary twin-screw extruder, such as about 20 seconds to 3 minutes, although not limited thereto.

[Second Member] The second member contains a fluorine-containing resin. The form of the second member is suitably selected corresponding to the purpose and the like, and may be in the form of a block, film, tube, blow-molded article, press-molded article or multilayer injection-molded article (such as that molded by DSI or DRI, in-mold molding, insert molding or multicolor molding) and the like. In the case the form of the second member is that of a film or tube, the thickness thereof can be, for example, from 10 µm to 25 mm.

The fluorine-containing resin is a polymer (homopolymer or copolymer) having a repeating unit derived from at least one type of fluorine-containing monomer. There are no particular limitations thereon provided the fluorine-containing resin is that which is able to undergo hot-melt processing.

Here, examples of fluorine-containing monomers include tetrafluoroethylene (TFE), trifluoroethylene, vinylidene fluoride (VDF), vinyl fluoride (VF), chlorotrifluoroethylene (CTFE), trichlorofluoroethylene, hexafluoropropylene (HFP), perfluoroalkyl vinyl ether represented by CF₂=CFOR^{f1} (wherein, R^{f1} represents a perfluoroalkyl group having 1 to 10 carbon atoms that may contain an etheric oxygen atom), CF₂=CF-OCH₂-R^{f2} (wherein, R^{f2} represents a perfluoroalkyl group having 1 to 10 carbon atoms that may contain an etheric oxygen atom), CF₂=CF(CF₂)ₚOCF=CF₂ (wherein, p represents 1 or 2), and CH₂=CX¹(CF₂)ₙX² (wherein, X¹ and X² mutually and independently represent a hydrogen atom or fluorine atom, and n represents an integer of 2 to 10). One type or two or more types thereof can be used.

Specific examples of the aforementioned CF₂=CFOR^{f1} include perfluoroalkyl vinyl ethers (to also be abbreviated as PAVE) such as CF₂=CFOCF₂ (perfluoro(methyl vinyl ether): PMVE), CF₂=CFOCF₂CF₃ (perfluoro(ethyl vinyl ether): PEVE), CF₂=CFOCF₂CF₂CF₃ (perfluoro(propyl vinyl ether): PPVE), CF₂=CFOCF₂CF₂CF₂CF₃ (perfluoro(butyl vinyl ether): PBVE) or CF₂=CFO(CF₂)₈F (perfluoro(octyl vinyl ether): POVE). Among these, CF₂=CFOCF₂ and CF₂=CFOCF₂CF₂CF₃ are preferable.

In addition, if n in a compound represented by the aforementioned general formula CH₂=CX¹(CF₂)ₙX² (wherein, X¹ and X² mutually and independently represent a hydrogen atom or fluorine atom and n represents an integer of 2 to 10) is less than the aforementioned value, modification of the fluorine-containing polymer (such as inhibiting the formation of cracks during molding of the copolymer and cracking of the molded article) may be inadequate, while on the other hand, if n exceeds the aforementioned value, this may be disadvantageous with respect to polymerization reactivity.

Specific examples of compounds represented by the aforementioned general formula CH₂=CX¹(CF₂)ₙX² include CH₂=CF(CF₂)₂F, CH₂=CF(CF₂)₃F, CH₂=CF(CF₂)₄F, CH₂=CF(CF₂)₅F, CH₂=CF(CF₂)₈F, CH₂=CF(CF₂)₂H, CH₂=CF(CF₂)₃H, CH₂=CF(CF₂)₄H, CH₂=CF(CF₂)₅H, CH₂=CF(CF₂)₈H, CH₂=CH(CF₂)₂F, CH₂=CH(CF₂)₃F, CH₂=CH(CF₂)₄F, CH₂=CH(CF₂)₅F, CH₂=CH(CF₂)₈F, CH₂=CH(CF₂)₂H, CH₂=CH(CF₂)₃H, CH₂=CH(CF₂)₄H, CH₂=CH(CF₂)₅H and CH₂=CH(CF₂)₈H. One type or two or more types thereof can be used.

Among these, compounds represented by CH₂=CH(CF₂)ₙF or CH₂=CF(CF₂)ₙH, in which n in the formula is 2 to 4, are more preferable due to being able to realize both chemical impermeability and crack resistance of resin B.

The fluorine-containing resin may further contain a polymerized unit based on a non-fluorine-containing monomer in addition to the aforementioned fluorine-containing monomer. Examples of non-fluorine-containing monomers include olefins having 2 to 4 carbon atoms such as ethylene, propylene or isobutene, vinyl esters such as vinyl chloride, vinylidene chloride, vinyl acetate, chlorovinyl acetate, vinyl lactate, vinyl butyrate, vinyl pivalate, vinyl benzoate, vinyl crotonate, methyl (meth)acrylate, ethyl (meth)acrylate, n-butyl (meth)acrylate or methyl crotonate, and vinyl ethers such as methyl vinyl ether (MVE), ethyl vinyl ether (EVE), butyl vinyl ether (BVE), isobutyl vinyl ether (IBVE), cyclohexyl vinyl ether (CHVE) or glycidyl vinyl ether. One type or two or more types thereof can be used. Among these, ethylene, propylene and vinyl acetate are preferable and ethylene is more preferable.

Among the fluorine-containing resins, at least one type selected from the group consisting of polymers at least composed of a tetrafluoroethylene unit (TFE unit) (polytetrafluoroethylene),
copolymers at least composed of a tetrafluoroethylene unit (TFE unit) and ethylene unit (E unit) (ethylene/tetrafluoroethylene copolymer),
polymers at least composed of a vinylidene fluoride unit (VDF unit) (polyvinylidene fluoride),
copolymers at least composed of a tetrafluoroethylene unit (TFE unit) and perfluoroalkyl vinyl ether unit (PAVE unit) (tetrafluoroethylene/perfluoroalkyl vinyl ether copolymer),
copolymers at least composed of a tetrafluoroethylene unit (TFE unit) and hexafluoropropylene unit (HFP unit) (tetrafluoroethylene/hexafluoropropylene copolymer),
copolymers at least composed of a tetrafluoroethylene unit (TFE unit), hexafluoropropylene unit (HFP unit) and vinylidene fluoride unit (VDF unit) (tetrafluoroethylene/ hexafluoropropylene/vinylidene fluoride copolymer),
copolymers at least composed of a tetrafluoroethylene unit (TFE unit), hexafluoropropylene unit (HFP unit) and/or perfluoroalkyl vinyl ether represented by the aforementioned formula CF₂=CFOR^{f1} (PAVE unit) (tetrafluoroethylene/hexafluoropropylene/PAVE copolymer),
copolymers at least composed of a chlorotrifluoroethylene unit (CTFE unit), and
copolymers at least composed of a chlorotrifluoroethylene unit (CTFE unit) and tetrafluoroethylene unit (TFE unit)
is preferable from the viewpoints of heat resistance, chemical resistance and chemical impermeability, and
at least one type selected from the group consisting of polytetrafluoroethylene, ethylene/tetrafluoroethylene copolymer, polyvinylidene fluoride, tetrafluoroethylene/perfluoroalkyl vinyl ether copolymer, tetrafluoroethylene/hexafluoropropylene copolymer, and tetrafluoroethylene/ hexafluoropropylene/vinylidene fluoride copolymer is preferable.

Examples of copolymers at least composed of a vinylidene fluoride unit (VDF unit) (to also be referred to as a "VDF copolymer") include vinylidene fluoride homopolymers (polyvinylidene fluoride (PVDF), ); copolymers composed of a VDF unit and TFE unit in which the content of the VDF unit is 30 mol% to 99 mol% and the content of the TFE unit is 1 mol% to 70 mol% based on all monomers excluding the functional group-containing monomers to be subsequently described; copolymers composed of a VDF unit, TFE unit and trichlorofluoroethylene unit in which the content of the VDF unit is 10 mol% to 90 mol%, the content of the TFE unit is 0 mol% to 90 mol%, and the content of the trichlorofluoroethylene unit is 0 mol% to 30 mol% based on all monomers excluding the functional group-containing monomers to be subsequently described; and copolymers composed of a VDF unit, TFE unit and HFP unit in which the content of the VDF unit is 10 mol% to 90 mol%, the content of the TFE unit is 0 mol% to 90 mol%, and the content of the HFP unit is 0 mol% to 30 mol% (VDF/TFE/HFP copolymer).

In the aforementioned VDF/TFE/HFP copolymer, the content of the VDF unit is preferably 15 mol% to 84 mol%, the content of the TFE unit is preferably 15 mol% to 84 mol% and the content of the HFP unit is preferably 0 mol% to 30 mol% based on all monomers with the exception of the functional group-containing monomers to be subsequently described.

Examples of copolymers at least composed of a tetrafluoroethylene unit (TFE unit) and ethylene unit (E unit) (also referred to as "ETFE copolymers") include copolymers in which the content of the TFE unit is 20 mol% or more, and additionally, copolymers in which the content of the TFE unit is 20 mol% to 80 mol%, the content of the E unit is 20 mol% to 80 mol%, and the content of a unit derived from a monomer able to be copolymerized therewith is 0 mol% to 60 mol%.

Examples of the aforementioned copolymerizable monomers include hexafluoropropylene (HFP), monomers represented by the aforementioned general formula CF₂=CFOR^{f1} (wherein, R^{f1} represents a perfluoroalkyl group having 1 to 10 carbon atoms that may contain an etheric oxygen atom), and a monomer represented by the aforementioned general formula CH₂=CX¹(CF₂)ₙX² (wherein, X¹ and X² mutually and independently represent a hydrogen atom or fluorine atom and n represents an integer of 2 to 10). One type or two or more types thereof can be used.

The copolymer at least composed of a tetrafluoroethylene unit (TFE unit) and ethylene unit (E unit) is preferably a fluoroolefin unit derived from a fluoroolefin such as that represented by the aforementioned general formula CH₂=CX¹(CF₂)ₙX² (wherein, X¹ and X² mutually and independently represent a hydrogen atom or fluorine atom and n represents an integer of 2 to 10), and hexafluoropropylene (HFP), and/or a PAVE unit derived from PAVE represented by the aforementioned general formula CF₂=CFOR^{f1} (wherein, R^{f1} represents a perfluoroalkyl group having 1 to 10 carbon atoms that may contain an etheric oxygen atom), and the content of the TFE unit is preferably 20 mol% to 80 mol%, the content of the E unit is preferably 20 mol% to 80 mol%, and the total content of the copolymer of the fluoroolefin unit derived from a fluoroolefin such as that represented by the aforementioned general formula CH₂=CX¹(CF₂)ₙX² (wherein, X¹ and X² mutually and independently represent a hydrogen atom or fluorine atom and n represents an integer of 2 to 10), and hexafluoropropylene (HFP), and/or the PAVE unit derived from PAVE represented by the aforementioned general formula CF₂=CFOR^{f1} (wherein, R^{f1} represents a perfluoroalkyl group having 1 to 10 carbon atoms that may contain an etheric oxygen atom) is preferably 0 mol% to 60 mol% based on all monomers excluding the functional group-containing monomers to be subsequently described.

Examples of copolymers at least composed of a tetrafluoroethylene unit (TFE unit) and ethylene unit (E unit) include copolymers composed of a TFE unit, E unit and fluoroolefin unit derived from a fluoroolefin represented by the aforementioned general formula CH₂=CX¹(CF₂)ₙX² (wherein, X¹ and X² mutually and independently represent a hydrogen atom or fluorine atom and n represents an integer of 2 to 10) in which the content of the TFE unit is 30 mol% to 70 mol%, the content of the E unit is 20 mol% to 55 mol% and the content of the fluoroolefin unit derived from a fluoroolefin represented by the aforementioned general formula CH₂=CX¹(CF₂)ₙX² (wherein, X¹ and X² mutually and independently represent a hydrogen atom or fluorine atom and n represents an integer of 2 to 10) is 0 mol% to 10 mol%; copolymers composed of a TFE unit, an E unit, an HFP unit and a unit derived from a monomer copolymerizable therewith in which the content of the TFE unit is 30 mol% to 70 mol%, the content of the E unit is 20 mol% and 55 mol%, the content of the HFP unit is 1 mol% to 30 mol%, and the content of the unit derived from a monomer copolymerizable therewith is 0 mol% to 10 mol%; and copolymers composed of a TFE unit, E unit and PAVE unit derived from PAVE represented by the aforementioned general formula CF₂=CFOR^{f1} (wherein, R^{f1} represents a perfluoroalkyl group having 1 to 10 carbon atoms that may contain an etheric oxygen atom) in which the content of the TFE unit is 30 mol% to 70 mol%, the content of the E unit is 20 mol% to 55 mol%, and the content of the PAVE unit derived from PAVE represented by the aforementioned general formula CF₂=CFOR^{f1} (wherein, R^{f1} represents a perfluoroalkyl group having 1 to 10 carbon atoms that may contain an etheric oxygen atom) is 0 mol% to 10 mol% based on all monomers excluding the functional group-containing monomers to be subsequently described.

Examples of copolymers at least composed of a tetrafluoroethylene unit (TFE unit), hexafluoropropylene unit (HFP unit) and/or PAVE unit derived from PAVE represented by the aforementioned general formula CF₂=CFOR^{f1} (wherein, R^{f1} represents a perfluoroalkyl group having 1 to 10 carbon atoms that may contain an etheric oxygen atom) (to also be referred to as TFE/HFP/PAVE copolymers) include:
copolymers composed of a TFE unit and HFP unit in which the content of the TFE unit is 70 mol% to 95 mol% and preferably 85 mol% to 93 mol%, and the content of the HFP unit is 5 mol% to 30 mol% and preferably 7 mol% to 15 mol% based on all monomers excluding the functional group-containing monomers to be subsequently described,
copolymers composed of a TFE unit and one type or two or more types of the PAVE unit derived from PAVE represented by the aforementioned general formula CF₂=CFOR^{f1} (wherein, R^{f1} represents a perfluoroalkyl group having 1 to 10 carbon atoms that may contain an etheric oxygen atom), in which the content of the TFE unit is 70 mol% to 95 mol% and the content of the one type or two or more types of the PAVE unit derived from PAVE represented by the aforementioned general formula CF₂=CFOR^{f1} (wherein, R^{f1} represents a perfluoroalkyl group having 1 to 10 carbon atoms that may contain an etheric oxygen atom) is 5 mol% to 30 mol% based on all monomers excluding the functional group-containing monomers to be subsequently described, and
copolymers composed of a TFE unit, HFP unit and one type or two or more types of a PAVE unit derived from PAVE represented by the aforementioned general formula CF₂=CFOR^{f1} (wherein, R^{f1} represents a perfluoroalkyl group having 1 to 10 carbon atoms that may contain an etheric oxygen atom), in which the content of the TFE unit is 70 mol% to 95 mol% and the total content of the HFP unit and one type or two or more types of the PAVE unit derived from PAVE represented by the aforementioned general formula CF₂=CFOR^{f1} (wherein, R^{f1} represents a perfluoroalkyl group having 1 to 10 carbon atoms that may contain an etheric oxygen atom) is 5 mol% to 30 mol% based on all monomers excluding the functional group-containing monomers to be subsequently described.

A copolymer at least composed of a chlorotrifluoroethylene unit (CTFE unit) refers to a chlorotrifluoroethylene copolymer having a CTFE unit [-CFCl-CF₂-] and composed of an ethylene unit (E unit) and/or fluorine-containing unit (to also be referred to as "CTFE copolymer (1)").

There are no particular limitations on the fluorine-containing monomer in the aforementioned CTFE copolymer (1) provided it is that other than CTFE, and examples thereof include tetrafluoroethylene (TFE), vinylidene fluoride (VDF), hexafluoropropylene (HFP), PAVE represented by the aforementioned general formula CF₂=CFOR^{f1} (wherein, R^{f1} represents a perfluoroalkyl group having 1 to 10 carbon atoms that may contain an etheric oxygen atom), and fluoroolefin represented by the aforementioned general formula CH₂=CX¹(CF₂)ₙX² (wherein, X¹ and X² mutually and independently represent a hydrogen atom or fluorine atom and n represents an integer of 2 to 10). One type or two or more types thereof can be used,

There are no particular limitations on the CTFE copolymer (1), examples thereof include CTFE/PAVE copolymer, CTFE/TFE/PAVE copolymer, CTFE/VDF copolymer, CTFE/HFP copolymer, CTFE/E copolymer, CTFE/TFE/E copolymer, CTFE/TFE/HFP/PAVE copolymer and CTFE/TFE/VDF/PAVE copolymer, and among these, CTFE/TFE/PAVE copolymer and CTFE/TFE/HFP/PAVE copolymer are preferable.

The content of the CTFE unit in the CTFE copolymer (1) is preferably 15 mol% to 70 mol% and more preferably 18 mol% to 65 mol%. On the other hand, the content of the E unit and/or fluorine-containing monomer unit is preferably 30 mol% to 85 mol% and more preferably 35 mol% to 82 mol% based on all monomers.

A copolymer at least composed of a chlorotrifluoroethylene unit (CTFE unit) and tetrafluoroethylene unit (TFE unit) is a chlorotrifluoroethylene copolymer composed of a CTFE unit [-CFCl-CF₂-], a TFE unit [-CF₂-CF₂-] and monomer unit copolymerizable with CTFE and TFE (to also be referred to as "CTFE copolymer (2)").

There are no particular limitations on the copolymerizable monomer in the aforementioned CTFE copolymer (2) provided it is that other than CTFE and TFE, and examples thereof include fluorine-containing monomer such as vinylidene fluoride (VDF), hexafluoropropylene (HFP), PAVE represented by the aforementioned general formula CF₂=CFOR^{f1} (wherein, R^{f1} represents a perfluoroalkyl group having 1 to 10 carbon atoms that may contain an etheric oxygen atom), a fluoroolefin represented by the aforementioned general formula CH₂=CX¹(CF₂)ₙX² (wherein, X¹ and X² mutually and independently represent a hydrogen atom or fluorine atom and n represents an integer of 2 to 10), and non-fluorine-containing monomer such as an olefin having 2 to 4 carbon atoms such as ethylene, propylene or isobutene, a vinyl ester such as vinyl acetate, methyl (meth)acrylate or ethyl (meth)acrylate, or a vinyl ether such as methyl vinyl ether (MVE), ethyl vinyl ether (EVE) or butyl vinyl ether (BVE). One type or two or more types thereof can be used. Among these, PAVE represented by the aforementioned general formula CF₂=CFOR^{f1} (wherein, R^{f1} represents a perfluoroalkyl group having 1 to 10 carbon atoms that may contain an etheric oxygen atom) is preferable, perfluoro(methyl vinyl ether) (PMVE) and perfluoro(propyl vinyl ether) (PPVE) are more preferable, and PPVE is even more preferable from the viewpoint of heat resistance.

There are no particular limitations on the CTFE copolymer (2), examples thereof include CTFE/TFE copolymer, CTFE/TFE/HFP copolymer, CTFE/TFE/VDF copolymer, CTFE/TFE/PAVE copolymer, CTFE/TFE/E copolymer, CTFE/TFE/HFP/PAVE copolymer and CTFE/TFE/VDF/PAVE copolymer, and among these, CTFE/TFE/PAVE copolymer and CTFE/TFE/HFP/PAVE copolymer are preferable.

The total content of the CTFE unit and TFE unit in CTFE copolymer (2) is preferably 90 mol% to 99.9 mol% based on all monomers, and the content of the monomer unit copolymerizable with aforementioned CTFE and TFE is preferably 0.1 mol% to 10 mol%. If the content of the aforementioned monomer unit copolymerizable with CTFE and TFE is less than the aforementioned value, moldability and resistance to environmental stress cracking may be inferior, while on the other hand, if the aforementioned value is exceeded, low chemical impermeability, heat resistance and mechanical properties may be inferior.

The content of the CTFE unit in CTFE copolymer (2) is preferably 15 mol% to 80 mol%, more preferably 17 mol% to 70 mol% and even more preferably 19 mol% to 65 mol% based on a value of 100 mol% for the total amount of the aforementioned CTFE unit and TFE unit. If the content of the CTFE unit is less than the aforementioned values, low chemical permeability may be inadequate, while on the other hand, if the aforementioned values are exceeded, fuel cracking resistance may decrease and productivity may decrease.

In the case the aforementioned monomer copolymerizable with CTFE and TFE in CTFE copolymer (2) is PAVE, the content of the PAVE unit is preferably 0.5 mol% to 7.0 mol% and more preferably 1.0 mol% to 5.0 mol% based on all monomers excluding the functional group-containing monomers to be subsequently described.

In the case the aforementioned monomer copolymerizable with CTFE and TFE in CTFE/TFE copolymer (2) consists of HFP and PAVE, the total content of the HFP unit and PAVE unit is preferably 0.5 mol% to 7.0 mol% and more preferably 1.0 mol% to 5.0 mol% based on all monomers excluding the functional group-containing monomers to be subsequently described.

The TFE/HFP/PAVE copolymer, CTFE copolymer (1) and CTFE copolymer (2) have predominantly superior chemical impermeability and particularly barrier properties to alcohol-containing gasoline. Alcohol-containing gasoline permeability coefficient is the value obtained by placing a sheet obtained from the measurement target resin in a cup for measuring permeability coefficient containing a mixed solvent of isooctane, toluene and ethanol obtained by mixing isooctane, toluene and ethanol at a volume ratio of 45:45:10, and calculating the permeability coefficient from the change in mass measured at 60°C. The aforementioned alcohol-containing gasoline permeability coefficients of the TFE/HFP/PAVE copolymer, CTFE copolymer (1) and CTFE copolymer (2) are preferably 1.5 g·mm/(m²·day) or less, more preferably 0.01 g·mm/(m²·day) to 1.0 g·mm/(m²·day), and even more preferably 0.02 g·mm/(m²·day) to 0.8 g·mm/(m²·day).

A fluorine-containing resin can be obtained by (co)polymerizing a monomer that composes the polymer using a conventional polymerization method. Among these, mainly a radical polymerization method is used. Namely, although there are no particular limitations on the means used to initiate the reaction provided it allows the reaction to proceed radically, the reaction is initiated by, for example, an organic or inorganic polymerization initiator, heat, light or ionizing radiation.

There are no particular limitations on the method used to produce the fluorine-containing resin and a polymerization method using a commonly used radical polymerization initiator is used. A known method can be employed for the polymerization method such as bulk polymerization, solution polymerization using an organic solvent such as a fluorohydrocarbon, chlorohydrocarbon, fluorochlorohydrocarbon, alcohol or hydrocarbon, suspension polymerization using an aqueous medium and a suitable organic solvent as necessary, or emulsion polymerization using an aqueous medium and an emulsifier.

In addition, polymerization can be carried out in batches or continuously using a single-tank or multi-tank agitating polymerization device or tubular polymerization device.

The radical polymerization initiator is in the manner of the decomposition temperature, at which the half-life is 10 hours, is preferably 0°C to 100°C and more preferably 20°C to 90°C. Specific examples of radical polymerization initiators include azo compounds such as 2,2'-azobisisobutyronitrile, 2,2'-azobis(2,4-dimethylvaleronitrile), 2,2' -azobis(2-methylvaleronitrile), 2,2' -azobis(2-cyclopropylpropionitrile), 2,2'-azobisdimethyl isobutyrate, 2,2'-azobis[2-(hydroxymethyl)propionitrile] or 4,4'-azobis(4-cyanopentanoic acid), hydroperoxides such as hydrogen peroxide, t-butyl hydroperoxide or cumene hydroperoxide, dialkyl peroxides such as di-t-butyl peroxide or dicumyl peroxide, non-fluorine-based diacyl peroxides such as acetyl peroxide, isobutyryl peroxide, octanoyl peroxide, benzoyl peroxide or lauroyl peroxide, ketone peroxides such as methyl ethyl ketone peroxide or cyclohexanone peroxide, peroxydicarbonates such as diisopropyl peroxydicarbonate, peroxyesters such as t-butyl peroxypivalate, t-butyl peroxyisobutyrate or t-butyl peroxyacetate, fluorine-containing diacyl peroxides such as compounds represented by (Z(CF₂)ₚCOO)₂ (wherein, Z represents a hydrogen atom, fluorine atom or chlorine atom, and p represents an integer of 1 to 10), and inorganic peroxides such as potassium persulfate, sodium persulfate or ammonium persulfate. One type or two or more types thereof can be used.

In addition, an ordinary chain transfer agent is preferably used to adjust molecular weight when producing the fluorine-containing resin. Examples of chain transfer agent include alcohols such as methanol or ethanol, chlorofluorohydrocarbons such as 1,3-dichloro-1,1,2,2,3-pentafluoropropane, 1,1-dichloro-1-fluoroethane, 1,2-dichloro-1,1,2,2-tetrafluoroethane, 1,1-dichloro-1-fluoroethane or 1,1,2-trichloro-1,2,2-trifluoroethane, hydrocarbons such as pentane, hexane or cyclohexane, and chlorohydrocarbons such as carbon tetrachloride, chloroform, methylene chloride or methyl chloride. One type or two or more types thereof can be used.

There are no particular limitations on the polymerization conditions and the polymerization temperature is preferably 0°C to 100°C and more preferably 20°C to 90°C. In general, a low temperature is preferable in order to avoid a decrease in heat resistance due to the formation of ethylene-ethylene chains within the polymer. Although suitably determined corresponding to other polymerization conditions, types of the solvent used, amount and vapor pressure of the solvent and the polymerization temperature, the polymerization pressure is preferably 0.1 MPa to 10 MPa and more preferably 0.5 MPa to 3 MPa. The polymerization time is preferably 1 hour to 30 hours.

In addition, although there are no particular limitations on the molecular weight of the fluorine-containing resin, it is preferably a solid polymer at room temperature and the fluorine-containing resin per se is preferably that which can be used as a thermoplastic resin or elastomer and the like. Molecular weight is controlled according to the concentration of the monomer used for polymerization, concentration of the polymerization initiator, concentration of the chain transfer agent and temperature.

The melt flow rate at a temperature 50°C higher than the melting point of the fluorine-containing resin and load of 5 kg is preferably 0.5 g/10 minutes to 200 g/10 minutes and more preferably 1 g/10 minutes to 100 g/10 minutes.

In addition, the polymer melting point and glass transition temperature of the fluorine-containing resin can be adjusted according to the types, composite ratio and so forth of fluorine-containing monomer and other monomers.

Although the melting point of the fluorine-containing resin is suitably selected according to the purpose, application and usage method, in the case of extruding with the first member, the melting point close to the molding temperature of the resin contained in the first member is preferable. Consequently, it is preferable to optimize the melting point of the fluorine-containing resin by suitably adjusting the ratio of the aforementioned fluorine-containing monomer, other monomers and the functional group-containing monomer to be subsequently described.

Here, melting point is defined as the temperature of the peak value of a melting curve measured by heating to a temperature equal to or higher than the expected melting point of a sample using a differential scanning calorimeter followed by cooling to 30°C by lowering the temperature of this sample at the rate of 10°C per minute, and after allowing to stand for about 1 minute at that temperature, raising the temperature at the rate of 10°C per minute.

The fluorine-containing resin used in the present invention preferably has a functional group having reactivity to an amino group within the molecular structure thereof. This functional group may be contained on the end of the molecule or in a side chain or main chain thereof. In addition, this functional group may be used alone in the fluorine-containing resin or two or more types thereof may be used in combination. The type and content of this functional group is suitably determined according to such factors as the type, shape, application, required adhesiveness between members, adhesion method or method used to introduce the functional group of the first member that is in direct contact with the second member containing the fluorine-containing resin.

Examples of functional groups having reactivity with an amino group include at least one type selected from the group consisting of a carboxyl group, acid anhydride group or carboxylate, sulfo group or sulfonate, epoxy group, cyano group, carbonate group and haloformyl group. In particular, at least one type selected from the group consisting of a carboxyl group, acid anhydride group or carboxylate, epoxy group, carbonate group and haloformyl group is preferable.

Examples of methods used to introduce reactive functional groups into the fluorine-containing resin include: (i) copolymerization of a copolymerizable monomer having a functional group during polymerization of the fluorine-containing resin, (ii) introduction of a functional group onto the end of a molecule of the fluorine-containing resin during polymerization using a polymerization initiator, chain transfer agent and so forth, and (iii) grafting a compound having a functional group capable of grafting as a reactive functional group (grafting compound) to a fluorine-containing polymer. These introduction methods can be used alone or can be used in a suitable combination thereof. In the case of considering inter-member adhesiveness in the composite member, a fluorine-containing resin produced using the aforementioned method (i) or (ii) is preferable. Production methods according to Japanese Unexamined Patent Publication No. H7-18035, Japanese Unexamined Patent Publication No. H7-25952, Japanese Unexamined Patent Publication No. H7-25954, Japanese Unexamined Patent Publication No. H7-173230, Japanese Unexamined Patent Publication No. H7-173446, Japanese Unexamined Patent Publication No. H7-173447 and Japanese Translation of PCT International Application Publication No. H10-503236 can be referred to with respect to the method of (iii). The following provides an explanation of the method of (i) consisting of copolymerization of a copolymerizable monomer having a functional group during polymerization of the fluorine-containing resin, and the method of (ii) consisting of introduction of a functional group onto the end of a molecule of the fluorine-containing polymer using a polymerization initiator and so forth.

In the method of (i) consisting of the copolymerization of a copolymerizable monomer having a functional group (which may also be abbreviated as a functional group-containing monomer) during production of the fluorine-containing resin, at least one type of monomer containing a functional group selected from the group consisting of a carboxyl group, acid anhydride group or carboxylate, hydroxyl group, sulfo group or sulfonate, epoxy group and cyano group is used as a polymerization monomer. Examples of functional group-containing monomers include functional group-containing non-fluorine monomers and functional group-containing fluorine-containing monomers.

Examples of functional group-containing non-fluorine monomers include unsaturated carboxylic acids and esters and other derivatives thereof such as acrylic acid, halogenated acrylic acid (excluding fluorine), methacrylic acid, halogenated methacrylic acid (excluding fluorine), maleic acid, halogenated maleic acid (excluding fluorine), fumaric acid, halogenated fumaric acid (excluding fluorine), itaconic acid, citraconic acid, crotonic acid or endobicyclo-[2.2.1]-5-heptene-2,3-dicarboxylic acid, carboxyl group-containing monomers such as maleic anhydride, itaconic anhydride, succinic anhydride, citraconic anhydride or endobicyclo-[2.2.1]-5-heptene-2,3-dicarboxylic anhydride, and epoxy group-containing monomers such as glycidyl acrylate, glycidyl methacrylate or glycidyl ether. One type or two or more types thereof can be used. The functional group-containing non-fluorine monomer is determined in consideration of the copolymerization reactivity with the fluorine-containing monomer used. Selecting a suitable functional group-containing non-fluorine monomer offers the advantages of allowing polymerization to proceed favorably and facilitating uniform introduction of the functional group-containing non-fluorine monomer into the main chain, thereby resulting in fewer unreacted monomers and enabling a reduction in impurities.

Examples of functional group-containing fluorine-containing monomers include unsaturated compounds represented by general formula X³X⁴C=CX⁵-(R⁷)ₙ-Y (wherein, Y represents a functional group selected from the group consisting of - COOM (wherein, M represents a hydrogen atom or alkali metal), carboxyl group-derived group, -SO₃M (wherein, M represents a hydrogen atom or alkali metal), sulfonic acid-derived group, epoxy group or -CN, X³, X⁴ and X⁵ may be the same or different and represent a hydrogen atom or fluorine atom (provided that n = 1 and R⁷ contains a fluorine atom in the case X³, X⁴ and X⁵ are the same and represent hydrogen atoms), R⁷ represents an alkylene group having 1 to 40 carbon atoms, a fluorine-containing oxyalkylene group having 1 to 40 carbon atoms, a fluorine-containing alkylene group having an ether bond and 1 to 40 carbon atoms, or a fluorine-containing oxyalkylene group having an ether bond and 1 to 40 carbon atoms, and n represents 0 or 1).

Examples of carboxyl group-derived groups represented by Y in the aforementioned general formula include groups represented by general formula - C(=O)Q¹ (wherein, Q¹ represents -OR⁸, -NH₂, F, Cl, Br or I and R⁸ represents an alkyl group having 1 to 20 carbon atoms or an aryl group having 6 to 22 carbon atoms).

Examples of sulfonic acid-derived groups represented by Y in the aforementioned general formula include groups represented by -SO₂Q² (wherein, Q² represents -OR⁹, -NH₂, F, Cl, Br or I and R⁹ represents an alkyl group having 1 to 20 carbon atoms or an aryl group having 6 to 22 carbon atoms).

The aforementioned Y is preferably -COOH, -SO₃H, -SO₃Na, -SO₂F or -CN.

Examples of functional group-containing fluorine-containing monomers in the case the functional group has a carbonyl group include perfluoroacrylic acid fluoride, 1-fluoroacrylic acid fluoride, acrylic acid fluoride and 1-trifluoromethacrylic acid fluoride and perfluorobutenoic acid. One type or two or more types thereof can be used.

The content of the functional group-containing monomer in the fluorine-containing resin based on all polymerization units is preferably 0.05 mol% to 20 mol%, more preferably 0.05 mol% to 10 mol%, and even more preferably 0.1 mol% to 5 mol% from the viewpoints of ensuring adequate inter-member adhesiveness, ensuring adequate heat resistance without causing a decrease in inter-member adhesiveness due to the conditions of the usage environment, preventing the occurrence of defective adhesion, coloring and foaming during processing at high temperatures, and preventing the occurrence of separation attributable to decomposition, coloring, foaming and elution during use at high temperatures. If the content of the functional group-containing monomer is within the aforementioned ranges, there is no decrease in polymerization rate during production and the fluorine-containing polymer (E) demonstrates superior adhesiveness with the corresponding material on which it is laminated. There are no particular limitations on the method used to add the functional group-containing monomer, and it may be added all at once at the start of polymerization or may be added continuously during polymerization. Although the addition method is suitably selected according to the decomposition reactivity of the polymerization initiator and the polymerization temperature, the concentration of the functional group-containing monomer is preferably maintained within these ranges by supplying the consumed amount of the functional group-containing monomer to the polymerization tank either continuously or intermittently as the functional group-containing monomer is consumed during polymerization.

In addition, a mixture of a fluorine-containing resin introduced with a functional group and a fluorine-containing polymer not introduced with a functional group may be employed provided the aforementioned content is satisfied.

In the method of (ii) consisting of the introduction of a functional group onto the end of a molecule of the fluorine-containing resin using a polymerization initiator and so forth, the functional group is introduced onto one end or both ends of the molecular chain of the fluorine-containing polymer. The functional group introduced onto the end of the molecular chain is preferably a carbonate group or haloformyl group.

The carbonate group introduced as an end group of the fluorine-containing resin is typically a group having a -OC(=O)O- bond, and specific examples thereof include a group having the structure of a -OC(=O)-R¹⁰ group [wherein, R¹⁰ represents a hydrogen atom, organic group (such as an alkyl group having 1 to 20 carbon atoms or an alkyl group having an ether bond and 2 to 20 carbon atoms] or an element of group I, II or VII], -OC(=O)OCH₃, -OC(=O)OC₃H₇, -OC(=O)OC₈H₁₇ and - OC(=O)OCH₂CH₂OCH₂CH₃. Specific examples of the haloformyl group include that having a structure of -COZ [wherein, Z represents a halogen element], -COF and - COCl. One type or two or more types thereof can be used.

In addition, although various methods using a polymerization initiator or chain extender can be used to introduce a carbonate group onto the end of a molecule of a polymer, a method using a peroxide, and particularly a peroxycarbonate or peroxyester, for the polymerization initiator can be used preferably from the viewpoints of economy, heat resistance and chemical resistance. According to this method, a carbonyl group derived from a peroxide, such as a carbonate group derived from a peroxycarbonate, an ester group derived from a peroxyester, or a haloformyl group obtained by converting these functional groups, can be introduced onto the end of a polymer. Among these polymerization initiators, the use of a peroxycarbonate is more preferable since it is possible to lower the polymerization temperature and prevent the occurrence of side reactions accompanying the initiation reaction.

Although various methods can be used to introduce a haloformyl group onto the end of a polymer molecule, as one example thereof, a polymer molecule having a haloformyl group on the end thereof can be obtained by heating a carbonate group of a fluorine-containing polymer having the aforementioned carbonate group on the end thereof to induce thermal decomposition (decarboxylation).

Examples of peroxycarbonates include diisopropyl peroxycarbonate, di-n-propyl peroxycarbonate, t-butyl peroxy isopropyl carbonate, t-butyl peroxy methacryloyloxy ethyl carbonate, bis(4-t-butylcyclohexyl) peroxydicarbonate and di-2-ethylhexyl peroxydicarbonate. One type or two or more types thereof can be used.

Although varying according to the type (composition and the like) and molecular weight of the target polymer, polymerization conditions and type of polymerization initiator used, the amount of peroxycarbonate used is preferably 0.05 parts by mass to 20 parts by mass and more preferably 0.1 parts by mass to 10 parts by mass based on 100 parts by mass of all polymers obtained by polymerization from the viewpoints of properly controlling polymerization rate and ensuring an adequate polymerization rate. The content of carbonate groups on the end of the polymer molecule can be controlled by adjusting the polymerization conditions. There are no particular limitations on the method used to add polymerization initiator and it may be added all at once at the start of polymerization or may be added continuously during the course of polymerization. The addition method is suitably selected according to the decomposition reactivity of the polymerization initiator and the polymerization temperature.

The number of end functional groups with respect to the 106 carbon atoms of the main chain in the fluorine-containing resin is preferably 150 to 3,000, more preferably 200 to 2,000 and even more preferably 300 to 1,000 from the viewpoints of ensuring adequate inter-member adhesiveness, ensuring adequate heat resistance without causing a decrease in inter-member adhesiveness due to the conditions of the usage environment, preventing the occurrence of defective adhesion, coloring and foaming during processing at high temperatures, and preventing the occurrence of separation attributable to decomposition, coloring, foaming and elution during use at high temperatures. In addition, a mixture of fluorine-containing polymer introduced with a functional group and fluorine-containing resin not introduced with a functional group may be used provided the aforementioned number of functional groups is satisfied.

As has been described above, the fluorine-containing resin used in the present invention is a fluorine-containing resin introduced with a functional group having reactivity to an amino group. As previously described, a fluorine-containing resin introduced with a functional group per se is able to maintain superior properties such as heat resistance, water resistance, low friction, chemical resistance, weather resistance, antifouling property or chemical impermeability that are characteristic of fluorine-containing resins, and is advantageous in terms of productivity and cost.

Moreover, as a result of containing a functional group having reactivity to an amino group in a molecule chain, superior inter-member adhesiveness with another member can be imparted to various materials used in composite members wherein inter-member adhesiveness was inadequate or unachievable without carrying out surface treatment or other special treatment or coating with an adhesive resin and the like.

The fluorine-containing resin composition can incorporate various fillers such as inorganic powder, glass fiber, carbon fiber, metal oxide or carbon corresponding to the objective or application and the like within a range that does not impair the performance thereof. In addition, pigment, ultraviolet absorber or other optional additives can be mixed therein in addition to filler. In addition to additives, resins such as other fluorine-based resins or thermoplastic resins or synthetic rubber and the like can also be incorporated, thereby making it possible to improve mechanical properties, improve weather resistance, impart design appeal, prevent static electricity or improve moldability.

The content percentage of fluorine-containing resin in the fluorine-containing resin composition is, for example, 70% by mass or more, preferably 80% by mass or more and more preferably 90% by mass or more.

The composite member according to the present embodiment is formed by directly contacting the first member and the second member. Specific examples of composite members include laminated tubes, multilayer films, multilayer blow-molded articles, multilayer press-molded articles and multilayer injection-molded articles (such as those molded by DSI or DRI, in-mold molding, insert molding or multicolor molding).

In the case the composite member is a laminated tube, the laminated tube is composed of at least two layers including a layer composed of the first member and a layer composed of the second member. A preferred embodiment of a laminated tube is such that the layer composed of the first member is arranged in the outermost layer of the laminated tube. Arranging the layer composed of the first member in the outermost layer allows the obtaining of a laminated tube having superior flexibility and vibration resistance.

The laminated tube is required to contain a layer composed of the second member that is arranged in direct contact with the layer composed of the first layer of the laminated tube to the inside thereof. As a result of having a layer composed of the second member, a laminated tube can be composed that demonstrates superior chemical impermeability and chemical resistance.

Although the outer diameter of the laminated tube is designed such that wall thickness is able to maintain the burst pressure of an ordinary tube without causing an increase in chemical permeability as well as facilitate tube assembly work and enable vibration resistance during use to maintain a favorable degree of flexibility in consideration of the flow rate of chemicals and the like therethrough, there are no particular limitations thereon. Outer diameter is preferably 1.5 mm to 150 mm, inner diameter is preferably 1 mm to 100 mm, and wall thickness is preferably 0.25 mm to 25 mm.

There are no particular limitations on the thickness of each layer of the laminated tube, and although the thickness of each layer can be adjusted corresponding to the type of polymer composing each layer, the total number of layers in the laminated tube or the application thereof, the thickness of each layer is determined in consideration of the properties of the laminated tube such as chemical impermeability, low-temperature impact resistance or flexibility. In general, the thickness of the layer composed of the first member and the layer composed of the second member is each preferably 3% to 90% based on the total thickness of the laminated tube. The thickness of the layer composed of the second member is more preferably 1% to 50% and even more preferably 5% to 30% based on the total thickness of the laminated tube in consideration of chemical impermeability, flexibility and cost.

There are no particular limitations on the number of layers in the laminated tube provided the number of layers is at least two including the layer composed of the first member and the layer composed of the second member. The laminated tube may also have one or two or more layers composed of another thermoplastic resin in addition to the layer composed of the first member and the layer composed of the second member in order to obtain a laminated tube that imparts additional functions or is economically advantageous.

Examples of thermoplastic resins composing the aforementioned another layer in the laminated tube include polyamide-based resin, polyolefin-based resin, polyester-based resin, polyether-based resin, polysulfone-based resin, polythioether-based resin, polyketone-based resin, polynitrile-based resin, polymethacrylate-based resin, polyvinyl ester-based resin, polyvinyl chloride-based resin, cellulose-based resin, polycarbonate-based resin and polyimide-based resin.

Specific examples of polyamide-based resins include polycaprolactam (polyamide 6), polyundecanelactam (polyamide 11), polydodecanelactam (polyamide 12), polyethylene adipamide (polyamide 26), polytetramethylene succinamide (polyamide 44), polytetramethylene glutamide (polyamide 45), polytetramethylene adipamide (polyamide 46), polytetramethylene azelamide (polyamide 49), polytetramethylene sebacamide (polyamide 410), polytetramethylene dodecamide (polyamide 412), polypentamethylene succinamide (polyamide 54), polypentamethylene glutamide (polyamide 55), polypentamethylene adipamide (polyamide 56), polypentamethylene azelamide (polyamide 59), polypentamethylene sebacamide (polyamide 510), polypentamethylene dodecamide (polyamide 512), polypentamethylene terephthalamide (polyamide 5T), polypentamethylene isophthalamide (polyamide 51), polypentamethylene hexahydroterephthalamide (polyamide 5T(H)), polypentamethylene naphthalamide (polyamide 5N), polyhexamethylene succinamide (polyamide 64), polyhexamethylene glutamide (polyamide 65), polyhexamethylene adipamide (polyamide 66), polyhexamethylene azelamide (polyamide 69), polyhexamethylene sebacamide (polyamide 610), polyhexamethylene dodecamide (polyamide 612), polyhexamethylene terephthalamide (polyamide 6T), polyhexamethylene isophthalamide (polyamide 61), polyhexamethylene hexahydroterephthalamide (polyamide 6T(H)), polyhexamethylene naphthalamide (polyamide 6N), poly-2-methylpentamethylene terephthalamide (polyamide M5T), poly-2-methylpentamethylene isophthalamide (polyamide M5I), poly-2-methylpentamethylene hexahydroterephthalamide (polyamide M5T(H)), poly-2-methylpentamethylene naphthalamide (polyamide M5N), polynonamethylene oxamide (polyamide 92), polynonamethylene adipamide (polyamide 96), polynonamethylene azelamide (polyamide 99), polynonamethylene sebacamide (polyamide 910), polynonamethylene dodecamide (polyamide 912), polynonamethylene terephthalamide (polyamide 9T), polynonamethylene isophthalamide (polyamide 91), polynonamethylene hexahydroterephthalamide (polyamide 9T(H)), polynonamethylene naphthalamide (polyamide 9N), poly-2-methyloctamethylene oxamide (polyamide M82), poly-2-methyloctamethylene adipamide (polyamide M86), poly-2-methyloctamethylene azelamide (polyamide M89), poly-2-methyloctamethylene sebacamide (polyamide M810), poly-2-methyloctamethylene dodecamide (polyamide M812), poly-2-methyloctamethylene terephthalamide (polyamide M8T), poly-2-methyloctamethylene isophthalamide (polyamide M8I), poly-2-methyloctamethylene hexahydroterephthalamide (polyamide M8T(H)), poly-2-methyloctamethylene naphthalamide (M8N), polytrimethylhexamethylene oxamide (polyamide TMH2), polytrimethylhexamethylene adipamide (polyamide TMH6), polytrimethylhexamethylene azelamide (polyamide TMH9), polytrimethylhexamethylene sebacamide (polyamide TMH10), polytrimethylhexamethylene dodecamide (polyamide TMH12), polytrimethylhexamethylene terephthalamide (polyamide TMHT), polytrimethylhexamethylene isophthalamide (polyamide TMHI), polytrimethylhexamethylene hexahydroterephthalamide (polyamide TMHT(H)), polytrimethylhexamethylene naphthalamide (polyamide TMHN), polydecamethylene oxamide (polyamide 102), polydecamethylene adipamide (polyamide 106), polydecamethylene azelamide (polyamide 109), polydecamethylene decamide (polyamide 1010), polydecamethylene dodecamide (polyamide 1012), polydecamethylene terephthalamide (polyamide 10T), polydecamethylene isophthalamide (polyamide 101), polydecamethylene hexahydroterephthalamide (polyamide 10T(H)), polydecamethylene naphthalamide (polyamide 10N), polydodecamethylene oxamide (polyamide 122), polydodecamethylene adipamide (polyamide 126), polydodecamethylene azelamide (polyamide 129), polydodecamethylene sebacamide (polyamide 1210), polydodecamethylene dodecamide (polyamide 1212), polydodecamethylene terephthalamide (polyamide 12T), polydodecamethylene isophthalamide (polyamide 121), polydodecamethylene hexahydroterephthalamide (polyamide 12T(H)), polydodecamethylene naphthalamide (polyamide 12N), polymetaxylylene adipamide (polyamide MXD6), polymetaxylylene suberamide (polyamide MXD8), polymetaxylylene azelamide (polyamide MXD9), polymetaxylylene sebacamide (polyamide MXD10), polymetaxylylene dodecamide (polyamide MXD12), polymetaxylylene terephthalamide (polyamide MDXT), polymetaxylylene isophthalamide (polyamide MXDI), polymetaxylylene naphthalamide (polyamide MXDN), polybis(4-aminocyclohexyl)methane dodecamide (polyamide PACM12), polybis(4-aminocyclohexyl)methane terephthalamide (polyamide PACMT), polybis(4-aminocyclohexyl)methane isophthalamide (polyamide PACMI), polybis(3-methyl-4-aminocyclohexyl)methane dodecamide (polyamidedimethyl PACM12), polyisophorone adipamide (polyamide IPD6), polyisophorone dodecamide (polyamide IPD12), polyisophorone terephthalamide (polyamide IPDT), polyisophorone isophthalamide (polyamide IPDI) and polyamide copolymers using these raw material monomers. Furthermore, the names indicated in the aforementioned parentheses of the specific examples of polyamide resins are based on JIS K6920-1:2000 entitled "Plastics-Polyamide (PA) molding and extrusion materials-Part 1: Designation system and basis for specifications".

Specific examples of polyolefin-based resins include high-density polyethylene (HDPE), medium-density polyethylene (MDPE), low-density polyethylene (LDPE), linear low-density polyethylene (LLDPE), ultra-high molecular weight polyethylene (UHMWPE), polypropylene (PP), ethylene/propylene copolymer (EPR), ethylene/butene copolymer (EBR), ethylene/propylene/diene copolymer (EPDM), polybutadiene (BR), butadiene/acrylonitrile copolymer (NBR), polyisoprene (IR), butene/isoprene copolymer, ethylene/vinyl acetate copolymer (EVA), saponified ethylene/vinyl acetate copolymer (EVOH), ethylene/acrylic acid copolymer (EAA), ethylene/methacrylic acid copolymer (EMAA), ethylene/methyl acrylate copolymer (EMA) ethylene/methyl methacrylate copolymer (EMMA) and ethylene/ethyl acrylate copolymer (EEA). Moreover, additional examples include carboxyl groups such as acrylic acid, methacrylic acid, maleic acid, fumaric acid, itaconic acid, crotonic acid, mesaconic acid, citraconic acid, glutaconic acid, cis-4-cyclohexene-1,2-dicarboxylic acid or endobicyclo[2.2.1]-5-heptene-2,3-dicarboxylic acid and metal salts thereof (Na, Zn, K, Ca, Mg), acid anhydride groups such as maleic anhydride, itaconic anhydride, citraconic anhydride or endobicyclo[2.2.1]-5-heptene-2,3-dicarboxylic anhydride, and the aforementioned polyolefin-based resins containing an epoxy group or other functional group such as glycidyl acrylate, glycidyl methacrylate, glycidyl ethacrylate, glycidyl itaconate or glycidyl citraconate.

Specific examples of polyester-based resins include polybutylene terephthalate (PBT), polyethylene terephthalate (PET), polyethylene isophthalate (PEI), PET/PEI copolymer, polytrimethylene terephthalate (PTT), polyarylate (PAR), polybutylene naphthalate (PBN), polyethylene naphthalate (PEN), liquid crystal polyester (LCP), polylactic acid (PLA) and polyglycolic acid (PGA).

Specific examples of polyether-based resins include polyacetal (POM) and polyphenylene oxide (PPO).

Specific examples of polysulfone-based resins include polysulfone (PSF) and polyether sulfone (PES).

Specific examples of polythioether-based resins include polyphenylene sulfide (PPS) and polythioether sulfone (PTES).

Specific examples of polyketone-based resins include polyether ether ketone (PEEK) and polyallyl ether ketone (PAEK).

Specific examples of polynitrile-based resins include polyacrylonitrile (PAN), polymethacrylonitrile, acrylonitrile/styrene copolymer (AS), methacrylonitrile/styrene copolymer, acrylonitrile/butadiene/styrene copolymer (ABS) and methacrylonitrile/styrene/butadiene copolymer (MBS).

Specific examples of polymethacrylate-based resins include polymethyl methacrylate (PMMA) and polyethyl methacrylate (PEMA).

Specific examples of polyvinyl ester-based resins include polyvinyl acetate (PVAc).

Specific examples of polyvinyl chloride-based resins include polyvinylidene chloride (PVDC), polyvinyl chloride (PVC), vinyl chloride/vinylidene chloride copolymer and vinylidene chloride/methyl acrylate copolymer.

Specific examples of cellulose-based resins include cellulose acetate and cellulose butyrate.

Specific examples of polyimide-based resins include thermoplastic polyimide (PI), polyamide-imide (PAI) and polyetherimide.

A polyester-based resin, polyamide-based resin or polythioether-based resin having a melting point of 230°C or lower is preferably used among the aforementioned examples of thermoplastic resins from the viewpoint of the melt stability of the polyurethane resin composition that composes the first member in the laminated tube.

In addition, any arbitrary base material other than a thermoplastic resin can be laminated, examples of which include paper, metal-based material, non-oriented, uniaxially oriented or biaxially oriented plastic film or sheet, woven fabric, nonwoven fabric, metal cotton and wood. Examples of metal-based materials include metals such as aluminum, iron, copper, nickel, gold, silver, titanium, molybdenum, magnesium, manganese, lead, tin, chromium, beryllium, tungsten or cobalt, metal compounds, alloy steels such as stainless steel composed of two or more types thereof, aluminum alloys, copper alloys such as brass or bronze, nickel alloys and other alloys.

Although the number of layers of the laminated tube of the present invention is two or more, the number of layers is preferably 8 or less, more preferably 2 layers to 7 layers and even more preferably 2 layers to 5 layers based on the mechanism of tube production devices.

Examples of methods used to produce the laminated tube include a method consisting of melt extrusion using an extruder corresponding to the number of layers or number of materials followed by simultaneously laminating on the inside or outside of die (coextrusion method), or a method consisting of first preliminarily producing a mono layer tube or laminated tube according to the aforementioned method followed by sequentially laminating resin on the outside into a single unit using an adhesive as necessary (coating method). The laminated tube is preferably molded by coextrusion molding.

In addition, in the case the resulting laminated tube has a complex shape or is subjected to hot bending after molding to obtain a molded article, the target molded article can be obtained by subjecting the aforementioned tube to heat treatment for 0.01 hours to 10 hours at a temperature below the lowest melting point of the melting points of the resins composing the aforementioned tube after having molded the aforementioned laminated tube in order to remove residual strain in the molded article.

The laminated tube may have a wavy region. The wavy region is a region formed into a wavy shape, bellows shape, accordion shape or corrugated shape. The wavy region may extend over the entire length of the laminated tube or may extend only partially over a suitable region at an intermediate location. The wavy region can be easily formed by first molding a cylindrical tube followed by continuing to mold to a desired wavy shape. As a result of having such a wavy region, the resulting laminated tube has shock absorption thereby facilitating mountability. Moreover, a connector or other required part can be added to the laminated tube or the laminated tube can be formed into an L-shape or U-shape and the like by bending processing.

A solid or sponge-like protective member (protector) composed of, for example, epichlorohydrin rubber (ECO), acrylonitrile/butadiene rubber (NBR), mixture of NBR and polyvinyl chloride, chlorosulfonated polyethylene rubber, chlorinated polyethylene rubber, acrylic rubber (ACM), chloroprene rubber (CR), ethylene/propylene rubber (EPR), ethylene/propylene/diene rubber (EPDM), mixed rubber of NBR and EPDM or a vinyl chloride-based, olefin-based, ester-based and other thermoplastic elastomer, can be arranged over the entire circumference or a portion thereof of a laminated tube molded in the aforementioned manner in consideration of stone chip damage, wear with other parts and flame resistance. The protective member may be made to be in the form of a sponge-like porous body using a known method. The use of a porous body enables the formation of a protector that is light weight and demonstrates superior heat insulating properties. In addition, material costs can also be reduced. Alternatively, the strength thereof may be improved by adding glass fiber and the like. Although there are no particular limitations on the shape of the protective member, the shape is normally that of a cylindrical member or block-shaped member having a recess that holds a laminated tube. In the case of a cylindrical member, the laminated tube can be inserted into a preliminarily fabricated cylindrical member or the cylindrical member can be extruded over the laminated tube followed by sealing the two together. In order to adhere the two components, an adhesive is coated onto the inner surface of the protective member or onto the aforementioned recess as necessary followed by inserting or fitting the laminated tube thereon and sealing the two together to form a structure in which the laminated tube and protective member are integrated into a single unit. In addition, the resulting structure can also be reinforced with metal and the like.

Examples applications of the laminated tube include various types of applications such as automotive parts, internal combustion engine applications, machine parts such as power tool housings, industrial materials, electrical and electronic components, medical applications, food applications, home and office supplies, construction material-related parts or furniture parts.

In addition, the laminated tube of the present invention is preferable as a chemical transport tube due to its superior chemical impermeability. Examples of chemicals include aromatic hydrocarbon-based solvents such as benzene, toluene or xylene, alcohols such as methanol, ethanol, propanol, butanol, pentanol, ethylene glycol, propylene glycol, diethylene glycol, phenol, cresol, polyethylene glycol or polypropylene glycol, phenol-based solvents, ether-based solvents such as dimethyl ether, dipropyl ether, methyl-t-butyl ether, dioxane or tetrahydrofuran, halogen-based solvents such as chloroform, methylene chloride, trichloroethylene, ethylene dichloride, perchloroethylene, monochloroethane, dichloroethane, tetrachloroethane, perchloroethane or chlorobenzene, ketone-based solvents such as acetone, methyl ethyl ketone, diethyl ketone or acetophenone, gasoline, kerosene, diesel gasoline, oxygenated gasoline, aminated gasoline, sour gasoline, castor oil-based brake fluid, glycol ether-based brake fluid, borate ester-based brake fluid, cold climate brake fluid, silicone oil-based brake fluid, mineral oil-based brake fluid, power steering fluid, hydrogen sulfide-containing oil, window washer fluid, engine coolant, urea solutions, glycerin solutions, pharmaceuticals, ink, paint and beverages.

The laminated tube is preferable as a tube for transporting the aforementioned chemicals, and specific examples thereof include a cooling water tube, coolant cooler tube, air-conditioner refrigerant tube, floor heater tube, fire extinguisher and fire extinguishing equipment tubes, medical cooling equipment tube, ink, paint spraying tube, feed tube, return tube, evaporation tube, fuel filler tube, ORVR tube, reserve tube, vent tube and other fuel tubes, oil tube, brake tube, window washer fluid tube, radiator tube, oil drilling tube, buried underground gasoline station tube and other chemical tubes.

In addition, the laminated tube can also be used as a tube for transporting various types of gases such as freon-11, freon-12, freon-21, freon-22, freon-113, freon-114, freon-115, freon-134A, freon-32, freon-123, freon-124, freon-125, freon-143A, freon-141b, freon-142b, freon-225, freon-C318, freon-502, methyl chloride, ethyl chloride, air, hydrogen, nitrogen, oxygen, carbon dioxide, methane, propane, isobutane, n-butane, argon, helium or xenon.

### [Examples]

Although the following provides a detailed explanation of the present invention by indicating examples and comparative examples thereof, the present invention is not limited thereto.

### [Production Example 1: Production of Polyamide Elastomer 1 (PAE-1)]

14.3 kg of ε-caprolactam (UBE INDUSTRIES, LTD.), 0.74 kg of adipic acid (Asahi Kasei Chemicals), 10.0 kg of Elastamin RT-1000 (Huntsman, USA, number average molecular weight: approx. 1000, XYX-type triblock polyether diamine compound), 11.2 g of sodium hypophosphite, and 80 g of Irganox 245 (BASF, hindered phenol-based antioxidant) were charged into a 70 L pressure vessel provided with a stirrer, thermometer, pressure gauge, nitrogen gas inlet port, pressure regulator and polymer outlet port. Heating was started after replacing the inside of the pressure vessel with nitrogen. Heating and stirring were continued for another five hours once the temperature inside the vessel reached 230°C and the polymerization reaction was carried out while distilling off the reaction water outside the system. Following completion of the reaction, a colorless, clear polymer was discharged from the polymer outlet port into water in the form of a strand followed by cutting with a pelletizer to obtain approximately 13 kg of PAE-1.

### [Production Example 2: Production of Polyamide Elastomer 2 (PAE-2)]

4.88 kg of an 80% aqueous solution of hexamethylene diamine (Asahi Kasei Chemicals), 9.87 kg of dodecanedioic acid (UBE INDUSTRIES, LTD.), 9.2 kg of Elastamin RT-1000 (Huntsman, USA, number average molecular weight: approx. 1000, XYX-type triblock polyether diamine compound), 1 kg of degassed water, 11.5 g of phosphorous acid and 69 g of Irganox 245 were charged into the same apparatus as that used in Production Example 1. After the replacing the inside of the vessel with nitrogen, heating was started in the presence of flowing nitrogen gas. Heating and stirring were continued for another five hours once the temperature inside the vessel reached 230°C and the polymerization reaction was carried out while distilling off the reaction water outside the system. After lowering the temperature over the course of two hours, the polymerization reaction was carried out for another 3 hours. Following completion of the reaction, the polymer was extracted using the same method as Production Example 1 to obtain approximately 13 kg of PAE-2.

### [Examples and Comparative Examples]

### (Production of First Member and Second Member)

Polyurethane resin and polyamide elastomer were mixed in the ratios indicated in Table 1 and Table 2 followed by melting and kneading using a single-screw extruder and press-molding under the conditions indicated below at 230°C for PAE-1 and PAE-2 and at 200°C in the case of using another elastomer to obtain a first member having a thickness of 1 mm. The Reference Example shown in Table 1 was press-molded at 170°C under the conditions indicated below.

The fluorine-containing resin was press-molded at 250°C under the conditions indicated below to obtain a second member having a thickness of 1 mm.
Mechanical pressure: 2 MPa (during preheating), 5 MPa (during molding), 250 kg/cm² (during cooling)
Time: 120 seconds (during preheating), 120 seconds (during molding), 120 seconds (during cooling)

### (Production of Composite Members)

Half the surface of the second member was covered with double-thickness aluminum foil followed by laminating the first member thereon, raising the temperature to 260°C for Table 1 or 250°C for Table 2 and press-molding at the pressures and times indicated above to obtain composite members having a thickness of 3 mm for Table 1 or thickness of 2 mm for Table 2.

### [Evaluation]

### (Peel Test)

A 180°C peel test (in compliance with JIS K6854-2) was performed on the composite members at a tension speed of 50 mm/min using a universal material tester (Tensilon UTMIII-200, Orientech). Peel strength was read from the maximum point of an S-S curve. In addition, the peeled state of the composite members after the peel test was observed. The results are shown in Tables 1 and 2.

**[Table 1]**

| | First member | | Second member | Composite member | Peeled state |
|---|---|---|---|---|---|
| | Polyurethane resin (part by mass) | Polyamide elastomer (part by mass) | Fluorine-containing resin (part by mass) | Peel strength (kg/mm) | |
| Example 1 | 100 | 5 | 100 | >0.38 | Breakage and destruction after slight peeling |
| Example 2 | 100 | 10 | 100 | >0.22 | Breakage and destruction of first member at adhered end |
| Example 3 | 100 | 20 | 100 | >0.17 | Some parts are peeling, remaining parts are breakage and destruction in first member |
| Comparative Example 1 | 100 | 0 | 100 | 0.03 | Peeling |
| Reference Example | 0 | 100 | 100 | >0.73 | Breakage and destruction of XPA member at adhered end |

In Table 1, peeling indicates peeling of both the first member and second member at the contact surface thereof.

### (Materials Used in Table 1)

Polyurethane resin: Ether-based polyurethane resin
Polyamide elastomer: UBESTA XPA(trademark), 9040X1 (UBE INDUSTRIES, LTD.)
Fluorine-containing resin: AH3000 (Asahi Glass, ETFE)

On the basis of Table 1, adhesiveness between the first member and the second member can be understood to improve when the first member contains polyurethane resin and polyamide elastomer.

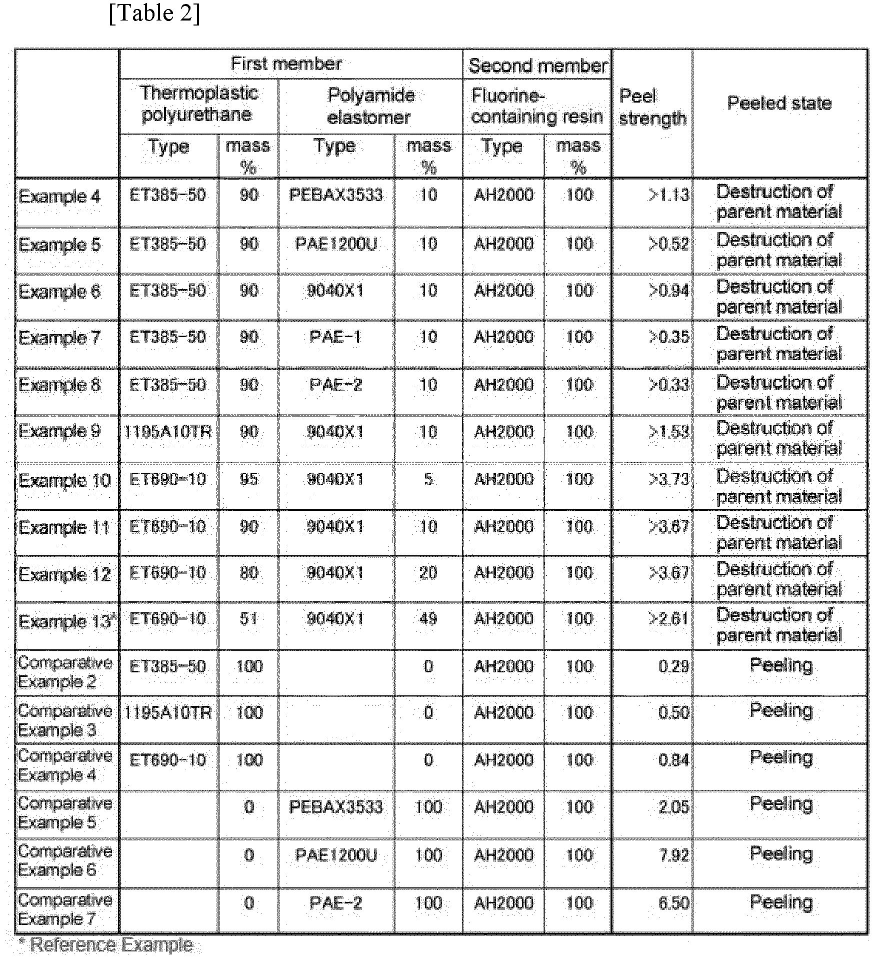

In Table 2, destruction of the parent material indicates breakage and destruction of at least one of the first member and second member, while peeling indicates peeling of both the first member and second member at the contact surface thereof. In addition, mass% is the value based on the mass of the first member and second member, respectively.

The abbreviations used in Table 2 are as indicated below.

### <Thermoplastic Polyurethane>

ET385-50: Polyether-based polyurethane resin, trade name: "Elastolan(trademark) ET385-50", BASF
1195A10TR: Polyether-based polyurethane resin, trade name: "Elastolan(trademark) 1195A10TR", BASF
ET690-10: Polyester-based polyurethane resin, trade name: "Elastolan(trademark) ET690-10", BASF

### <Polyamide Elastomer>

PEBAX3533: Polyamide elastomer containing ring-opening polycondensate of lauryl lactam and polytetramethylene ether glycol, trade name: "PEBAX(trademark) 3533", ARKEMA
PAE1200U: Polyamide elastomer containing ring-opening polycondensate of lauryl lactam and constituent unit derived from hydrogenated dimer acid, trade name: "UBE PAE1200U", UBE INDUSTRIES, LTD.
9040X1: Polyamide elastomer having ring-opening polycondensate of lauryl lactam and XYX-type triblock polyether structure, trade name: "UBESTA XPA® 9040X1, UBE INDUSTRIES, LTD.
PAE-1: PAE-1 obtained in Production Example 1
PAE-2: PAE-2 obtained in Production Example 2

### <Fluorine-containing Resin>

AH2000: Trade name "ETFE AH2000", Asahi Glass Ltd.

Based on Examples 4 to 8, adhesiveness between the first member and second member can be understood to improve regardless of the type of polyamide elastomer when a polyamide elastomer is incorporated in the thermoplastic polyurethane for the first member.

Based on Examples 10 to 12 and Reference Example 13, peel strength can be understood to increase the smaller the amount of polyamide elastomer in the first member.

Based on Examples 4 to 12 and Reference Example 13, adhesiveness between the first member and the second member can be understood to improve regardless of the type of thermoplastic polyurethane in the first member when polyamide elastomer is further incorporated therein.

In contrast, based on Comparative Examples 2 to 7, adhesiveness between the first member and the second member can be understood to be inadequate in the case of using only thermoplastic polyurethane for the first member and in the case of using only polyamide elastomer for the first member.

## Claims

1. A composite member obtained by directly contacting a first member containing a thermoplastic polyurethane and a polyamide elastomer and a second member containing a fluorine-containing resin,
wherein the content percentage of polyurethane in the first member is 70% by mass or more and less than 100% by mass and the content percentage of the polyamide elastomer in the first member is 0.01% by mass or more and 30% by mass or less.

2. The composite member according to claim 1, wherein the polyamide elastomer has a hard segment and a soft segment, and the hard segment has a polyamide constituent unit formed from at least one type selected from the group consisting of a nylon salt composed of a diamine and a dicarboxylic acid, an aminocarboxylic acid compound represented by the following formula (2), and a lactam compound represented by the following formula (3): 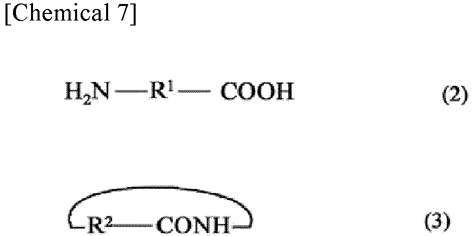 (in the formula (2) and (3), R¹ represents a linking group containing a hydrocarbon chain and R² represents a linking group containing a hydrocarbon chain).

3. The composite member according to claim 2, wherein the soft segment has a polyether constituent unit.

4. The composite member according to claim 2 or 3, wherein the polyamide elastomer has a polyamide constituent unit formed from at least one type selected from the group consisting of co-lauryl lactam, 11-aminoundecanoic acid and 12-aminododecanoic acid.

5. The composite member according to any of claims 2 to 4, wherein the soft segment has a polyether constituent unit formed from at least one type selected from the group consisting of polyethylene glycol, polypropylene glycol, polytetramethylene ether glycol and a XYX-type triblock polyether represented by the following formula (5): 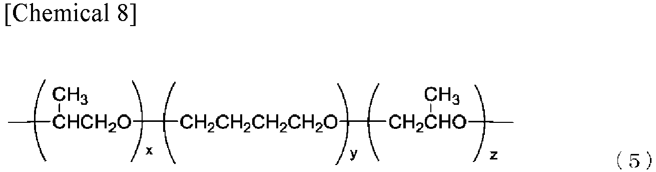 (in the formula (5), x represents an integer of 1 to 20, y represents an integer of 4 to 50, and z represents an integer of 1 to 20).

6. The composite member according to any of claims 2 to 5, wherein the hard segment contains the polyamide constituent unit and a constituent unit derived from a dicarboxylic acid represented by the following formula (4): 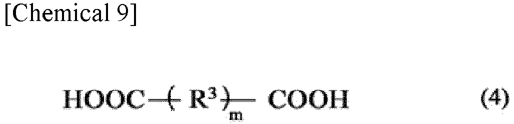 (in the formula (4), R³ represents a linking group containing a hydrocarbon chain and m represents 0 or 1).

7. The composite member according to claim 1, wherein the polyamide elastomer comprises:
a first constituent unit derived from a diamine compound represented by the following formula (1),
a second constituent unit derived from an aminocarboxylic acid compound represented by the following formula (2) or a lactam compound represented by the following formula (3), and
a third constituent unit derived from a dicarboxylic acid compound represented by the following formula (4): 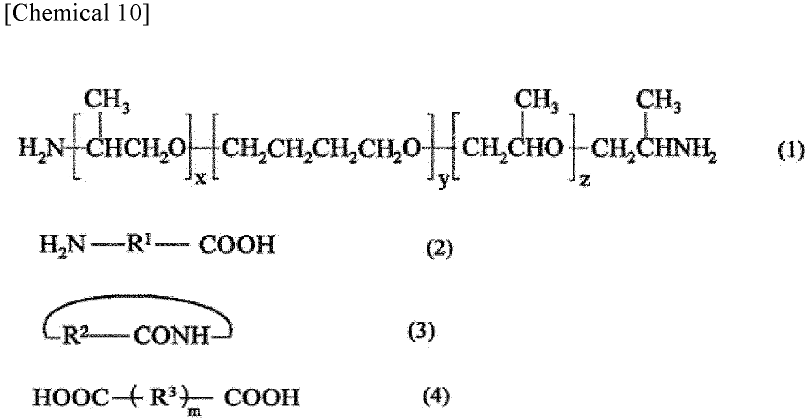 (wherein, x represents an integer of 1 to 20, y represents an integer of 4 to 50, z represents an integer of 1 to 20, R¹ represents a linking group containing a hydrocarbon chain, R² represents a linking group containing a hydrocarbon chain, R³ represents a linking group containing a hydrocarbon chain, and m represents 0 or 1).

8. The composite member according to claim 1, wherein the fluorine-containing resin is at least one type selected from the group consisting of polytetrafluoroethylene, ethylene/tetrafluoroethylene copolymer, polyvinylidene fluoride, tetrafluoroethylene/perfluoroalkyl vinyl ether copolymer, tetrafluoroethylene/hexafluoropropylene copolymer, and tetrafluoroethylene/hexafluoropropylene/vinylidene fluoride copolymer.

9. A laminate composed of the composite member according to claim 1.

10. A laminated tube composed of the composite member according to claim 1.

## Patentansprüche

1. Verbundelement, erhalten durch direktes Inkontaktbringen eines ersten Elements, das ein thermoplastisches Polyurethan und ein Polyamidelastomer enthält, und eines zweiten Elements, das ein Fluor-haltiges Harz enthält,
wobei der prozentuale Gehalt des Polyurethans in dem ersten Element 70 Masse-% oder mehr und weniger als 100 Masse-% beträgt und der prozentuale Gehalt des Polyamidelastomers in dem ersten Element 0,01 Masse-% oder mehr und 30 Masse-% oder weniger beträgt.

2. Verbundelement gemäß Anspruch 1, wobei das Polyamidelastomer ein hartes Segment und ein weiches Segment aufweist und das harte Segment eine konstitutionelle Polyamideinheit aus mindestens einem Typ, ausgewählt aus der Gruppe, bestehend aus einem Nylonsalz, das aus einem Diamin und einer Dicarbonsäure zusammengesetzt ist, einer durch die folgende Formel (2) dargestellten Aminocarbonsäureverbindung und einer durch die folgende Formel (3) dargestellten Lactamverbindung, gebildet ist: 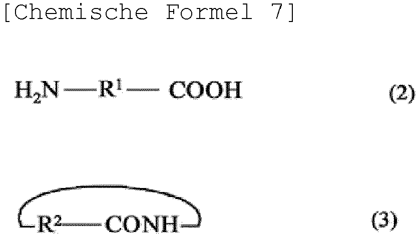 (in der Formel (2) und (3) stellt R¹ eine Verknüpfungsgruppe dar, die eine Kohlenwasserstoffkette enthält, und R² stellt eine Verknüpfungsgruppe dar, die eine Kohlenwasserstoffkette enthält).

3. Verbundelement gemäß Anspruch 2, wobei das weiche Segment eine konstitutionelle Polyethereinheit aufweist.

4. Verbundelement gemäß Anspruch 2 oder 3, wobei die Polyamidelastomer eine konstitutionelle Polyamideinheit aufweist, die aus mindestens einem Typ, ausgewählt aus der Gruppe, bestehend aus ω-Lauryllactam, 11-Aminoundecansäure und 12-Aminododecansäure, gebildet ist.

5. Verbundelement gemäß irgendeinem der Ansprüche 2 bis 4, wobei das weiche Segment eine konstitutionelle Polyethereinheit aufweist, die aus mindestens einem Typ, ausgewählt aus der Gruppe, bestehend aus Polyethylenglykol, Polypropylenglykol, Polytetramethylenetherglykol und einem durch die folgende Formel (5) dargestellten Triblock-Polyether vom XYX-Typ, gebildet ist: 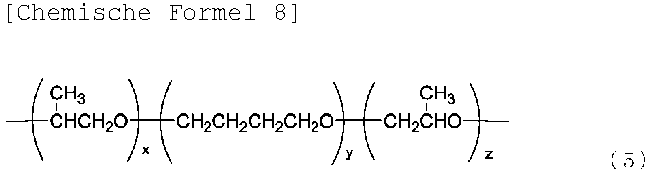 (in der Formel (5) stellt x eine ganze Zahl von 1 bis 20 dar, y stellt eine ganze Zahl von 4 bis 50 dar und z stellt eine ganze Zahl von 1 bis 20 dar).

6. Verbundelement gemäß irgendeinem der Ansprüche 2 bis 5, wobei das harte Segment die konstitutionelle Polyamideinheit und eine konstitutionelle Einheit, die von einer durch die folgende Formel (4) dargestellten Dicarbonsäure abgeleitet ist, enthält: 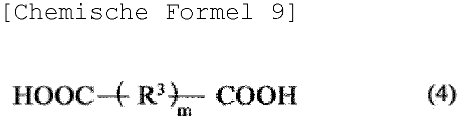 (in der Formel (4) stellt R³ eine Verknüpfungsgruppe dar, die eine Kohlenwasserstoffkette enthält, und m stellt 0 oder 1 dar).

7. Verbundelement gemäß Anspruch 1, wobei das Polyamidelastomer umfasst:
eine erste konstitutionelle Einheit, die von einer durch die folgende Formel (1) dargestellten Diaminverbindung abgeleitet ist,
eine zweite konstitutionelle Einheit, die von einer durch die folgende Formel (2) dargestellten Aminocarbonsäureverbindung oder einer durch die folgende Formel (3) dargestellten Lactamverbindung abgeleitet ist, und
eine dritte konstitutionelle Einheit, die von einer durch die folgende Formel (4) dargestellten Dicarbonsäureverbindung abgeleitet ist. 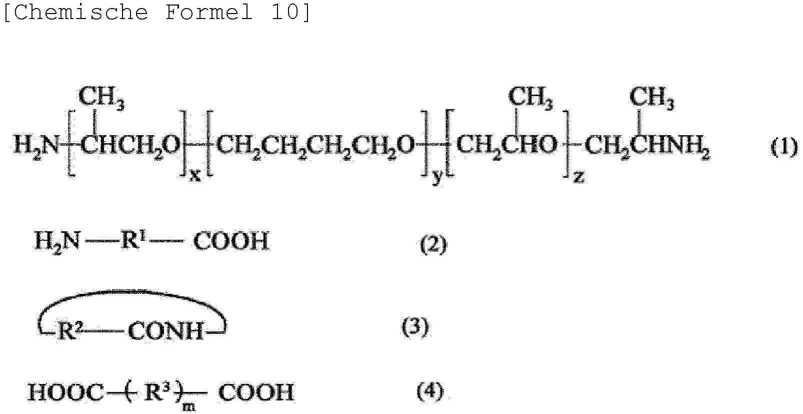 (worin x eine ganze Zahl von 1 bis 20 darstellt, y eine ganze Zahl von 4 bis 50 darstellt, z eine ganze Zahl von 1 bis 20 darstellt, R¹ eine Verknüpfungsgruppe darstellt, die eine Kohlenwasserstoffkette enthält, R² eine Verknüpfungsgruppe darstellt, die eine Kohlenwasserstoffkette enthält, R³ eine Verknüpfungsgruppe darstellt, die eine Kohlenwasserstoffkette enthält, und m 0 oder 1 darstellt).

8. Verbundelement gemäß Anspruch 1, wobei das Fluor-haltige Harz mindestens ein Typ, ausgewählt aus der Gruppe, bestehend aus Polytetrafluorethylen, Ethylen/Tetrafluorethylen-Copolymer, Polyvinylidenfluorid, Tetrafluorethylen/Perfluoralkylvinylether-Copolymer, Tetrafluorethylen/Hexafluorpropylen-Copolymer und Tetrafluorethylen/Hexafluorpropylen/Vinylidenfluorid-Copolymer, ist.

9. Laminat, zusammengesetzt aus dem Verbundelement gemäß Anspruch 1.

10. Laminierter Schlauch, zusammengesetzt aus dem Verbundelement gemäß Anspruch 1.

## Revendications

1. Élément composite obtenu par contact direct d'un premier élément contenant un polyuréthane thermoplastique et un élastomère de polyamide et d'un second élément contenant une résine contenant du fluor,
dans lequel la teneur en pourcentage de polyuréthane dans le premier élément est de 70% en masse ou plus et de moins de 100% en masse et la teneur en pourcentage de l'élastomère de polyamide dans le premier élément est de 0,01% en masse ou plus et de 30 % en masse ou moins.

2. Élément composite selon la revendication 1, dans lequel l'élastomère de polyamide présente un segment dur et un segment mou, et le segment dur présente une unité constitutive de polyamide formée à partir d'au moins un type choisi dans le groupe consistant en un sel de nylon composé d'une diamine et d'un acide dicarboxylique, d'un composé d'acide aminocarboxylique représenté par la formule (2) suivante, et d'un composé de lactame représenté par la formule (3) suivante : 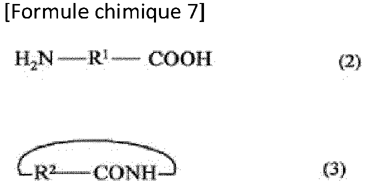 (dans la formule (2) et (3), R¹ représente un groupe de liaison contenant une chaîne hydrocarbonée et R² représente un groupe de liaison contenant une chaîne hydrocarbonée).

3. Élément composite selon la revendication 2, dans lequel le segment mou présente une unité constitutive de polyéther.

4. Élément composite selon la revendication 2 ou 3, dans lequel l'élastomère de polyamide présente une unité constitutive de polyamide formée à partir d'au moins un type choisi dans le groupe consistant en ω-lauryl lactame, acide 11-aminoundécanoïque et acide 12-aminododécanoïque.

5. Élément composite selon l'une quelconque des revendications 2 à 4, dans lequel le segment mou présente une unité constitutive de polyéther formée à partir d'au moins un type choisi dans le groupe consistant en polyéthylène glycol, polypropylène glycol, polytétraméthylène éther glycol et un polyéther triséquencé de type XYX représenté par la formule (5) suivante : 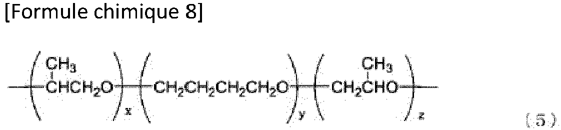 (dans la formule (5), x représente un nombre entier de 1 à 20, y représente un nombre entier de 4 à 50, et z représente un nombre entier de 1 à 20).

6. Élément composite selon l'une quelconque des revendications 2 à 5, dans lequel le segment dur contient l'unité constitutive de polyamide et une unité constitutive dérivée d'un acide dicarboxylique représenté par la formule (4) suivante : 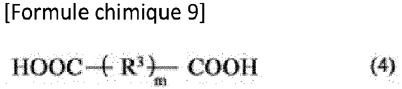 (dans la formule (4), R³ représente un groupe de liaison contenant une chaîne hydrocarbonée et m représente 0 ou 1).

7. Élément composite selon la revendication 1, dans lequel l'élastomère de polyamide comprend :
une première unité constitutive dérivée d'un composé de diamine représenté par la formule (1) suivante,
une deuxième unité constitutive dérivée d'un composé d'acide aminocarboxylique représenté par la formule (2) suivante ou d'un composé de lactame représenté par la formule (3) suivante, et
une troisième unité constitutive dérivée d'un composé d'acide dicarboxylique représenté par la formule (4) suivante : 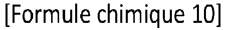 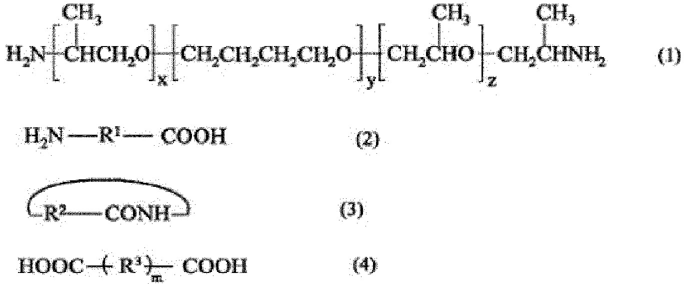 (dans lequel, x représente un nombre entier de 1 à 20, y représente un nombre entier de 4 à 50, z représente un nombre entier de 1 à 20, R¹ représente un groupe de liaison contenant une chaîne hydrocarbonée, R² représente un groupe de liaison contenant une chaîne hydrocarbonée, R³ représente un groupe de liaison contenant une chaîne hydrocarbonée, et m représente 0 ou 1).

8. Élément composite selon la revendication 1, dans lequel la résine contenant du fluor est au moins un type choisi dans le groupe consistant en polytétrafluoroéthylène, copolymère d'éthylène/tétrafluoroéthylène, fluorure de polyvinylidène, copolymère de tétrafluoroéthylène/éther perfluoroalkyl vinylique, copolymère de tétrafluoroéthylène/hexafluoropropylène et copolymère de tétrafluoroéthylène/hexafluoropropylène/fluorure de vinylidène.

9. Stratifié composé de l'élément composite selon la revendication 1.

10. Tube stratifié composé de l'élément composite selon la revendication 1.
